# EUROPÄISCHE PATENTSCHRIFT

(11) **EP 2 648 919 B1**
(45) Veröffentlichungstag und Bekanntmachung des Hinweises auf die Patenterteilung: **18.02.2015**
(21) Anmeldenummer: 11801657.5
(22) Anmeldetag: 06.12.2011
(51) Int. Cl.: B42D 25/00

(54) **MODULARE LASERINDIVIDUALISIERUNGSVORRICHTUNG UND LASERINDIVIDUALISIERUNGSSYSTEM**
MODULAR LASER INDIVIDUALIZATION APPARATUS AND LASER INDIVIDUALIZATION SYSTEM
DISPOSITIF D'INDIVIDUALISATION LASER MODULAIRE ET SYSTÈME D'INDIVIDUALISATION LASER

(30) Priorität: 06.12.2010 DE 102010053604
(43) Veröffentlichungstag der Anmeldung: 16.10.2013
(60) Teilanmeldung: 14151342.4
(73) Patentinhaber: Bundesdruckerei GmbH, 10969 Berlin (DE)
(72) Erfinder: RICHTER, Werner, 80999 München (DE); KRAMER, Thomas, 80805 München (DE); KROMPHARDT, Matthias, 14109 Berlin (DE); MYSLIWITZ, Daniel, 80995 München (DE)
(74) Vertreter: Patentanwälte Bressel und Partner mbB
(86) Internationale Anmeldenummer: PCT/EP2011/071948
(87) Internationale Veröffentlichungsnummer: WO 2012/076539

(56) Entgegenhaltungen:
- EP-A1- 0 863 481
- EP-A2- 1 798 180
- WO-A1-01/54918
- WO-A1-02/075398
- WO-A1-03/065102
- DE-A1-102006 055 595
- JP-A- 2004 351 516
- JP-A- 2005 081 548
- JP-A- 2009 058 792
- US-A- 3 189 342
- US-A- 4 230 902
- US-A- 4 920 364
- US-A1- 2003 031 451
- US-B1- 6 519 387

## Beschreibung

Die Erfindung betrifft eine Laserindividualisierungsvorrichtung für Dokumente.

Im Stand der Technik ist eine Vielzahl von Dokumenten bekannt, bei denen nach einer Herstellung eines Dokumentenrohlings mittels einer Wechselwirkung von Laserstrahlung mit dem Dokumentenrohling dauerhaft Informationen in diesem gespeichert werden. Solche Verfahren werden insbesondere für Wert- und/oder Sicherheitsdokumente verwendet. Mittels einer Wechselwirkung von Laserstrahlung mit dem Material des Dokumentenrohlings wird in diesem eine bleibende Veränderung bewirkt, über welche die Information gespeichert wird. Ein solcher Vorgang wird ganz allgemein auch als Laserbeschriftung bezeichnet.

Sicherheitsdokumente sind solche Dokumente, die mindestens ein Sicherheitsmerkmal aufweisen, welches eine Nachahmung, Verfälschung, ein Kopieren oder Ähnliches zumindest erschwert oder unmöglich macht. Als Wertdokumente werden solche Sicherheitsdokumente bezeichnet, die einen Wert verkörpern. Sicherheitsdokumente sind beispielsweise Reisepässe, Personalausweise, Identifikationskarten, Zugangskarten, Führerscheine, Tickets, aber auch Verpackungen und Echtheitszertifikate. Wertdokumente sind beispielsweise Postwertzeichen, Banknoten, Aktien, Zollmarken und Ähnliches.

Eine Vielzahl von Sicherheitsdokumenten wird heutzutage auf Kunststoffbasis hergestellt. Hierbei besteht der Dokumentenrohling im Wesentlichen aus einem Kunststoffkörper auf Basis eines oder mehrerer Kunststoffe, in den jedoch auch andere Materialien, beispielsweise Papiere, Metallfolien, belichtete Hologramme oder auch mikroelektronische Schaltkreise und Mikrochips integriert sein können. Aus dem Stand der Technik sind eine Reihe unterschiedlicher Ausführungsformen von Sicherheitsdokumenten bekannt.

Um individuelle Informationen, d.h. Informationen, die nur in einem Dokument einer Vielzahl gleichartiger Dokumente gespeichert sind, in ein Dokument einzubringen, ist es aus dem Stand der Technik bekannt, Laserbeschriftungsverfahren zu verwenden. Hierzu wird Laserstrahlung gesteuert auf einen Dokumentenrohling gerichtet und hierdurch eine Wechselwirkung zwischen der Laserstrahlung und Bestandteilen des Dokumentenrohlings herbeigeführt, die zu einer permanenten Änderung, beispielsweise durch eine Pyrolyse eines Kunststoffmaterials, eine Ablation von Material des Dokumentrohlings, ein Auslösen einer chemischen Reaktion in dem Dokumentenrohling oder Ähnliches, führt.

Ein großer Vorteil der Laserbeschriftung zur individuellen Einbringung von Informationen in Dokumentenrohlinge besteht darin, dass diese Laserbeschriftung nur mit erheblichem technischem Aufwand durchgeführt werden kann, und somit für Fälscher nicht ohne Weiteres ausführbar oder nachahmbar ist. Darüber hinaus erfolgt die Einbringung der Information beispielsweise bei einer teilweisen Pyrolisierung des Dokumentenrohlingsmaterials im Inneren des Dokumentenrohlings und ist somit einer Manipulation von außen weitestgehend entzogen. Ein weiterer Vorteil besteht darin, dass Laserindividualisierungsvorrichtungen dezentralisiert angeordnet werden können und somit Dokumentenrohlinge, die mit einer Vielzahl von Sicherheitselementen zentral hergestellt werden, dezentral mit individuellen Informationen versehen werden können. Beispielsweise können Führerscheine dezentral in Ausgabestellen mit dem Namen, einem Passbild, und weiteren persönlichen oder individualisierenden Merkmalen, beispielsweise einer Seriennummer, versehen werden. Hierdurch können die Zeitabläufe zwischen einer Beantragung eines solchen Dokuments und der Ausstellung deutlich verkürzt werden, da keine zentralisierte Herstellung der Sicherheitsdokumente notwendig ist, ohne eine Einschränkung hinsichtlich der vorhandenen Sicherheitsmerkmale in dem fertigen Dokument hinnehmen zu müssen.

Ein Nachteil der aus dem Stand der Technik bekannten Laserindividualisierungsvorrichtungen für Sicherheitsdokumente besteht darin, dass diese aufgrund der unterschiedlichen Komponenten, die eine solche Laserindividualisierungsvorrichtung benötigt, hinsichtlich ihrer geometrischen Abmessungen relativ große und unhandlich zu handhabende sowie schwere Vorrichtungen sind. Insbesondere in Verwaltungsgebäuden ist daher eine Handhabung und auch eine Sicherung gegenüber einem Diebstahl oft erschwert.

In der JP 2009-058792 A ist eine Lasermarkiervorrichtung beschrieben, bei der ein Bestrahlungslaser einfach ausgetauscht werden kann. Die Vorrichtung umfasst eine Laseroszillatoreinheit mit einem Laseroszillator zum Abstrahlen eines Laserstrahls. Eine Laserbestrahlungseinheit umfasst ein optisches Beleuchtungssystem zum Ausstrahlen des Laserstrahls der Laseroszillatoreinheit auf ein Werkstück. Ein optisches Faserkabelelement ist zum Verbinden der Laseroszillatoreinheit und der Laserbestrahlungseinheit vorgesehen. An einer Spitze eines zylindrischen Teils des optischen Faserkabelelements ist eine entfernbare Einheit angeordnet, die von einem Befestigungsteil der Laserbestrahlungseinheit entfernbar ist. Die entfernbare Einheit umfasst ein Basiselement, das an einem Befestigungselement fixiert ist, eine Gleitplatte, die anpassbar in einer Position orthogonal zu einer Befestigungsrichtung relativ zu dem Basiselement befestigt ist, und ein bewegliches Element, das drehbar anpassbar um eine Z-Achse relativ zu der Gleitplatte installiert ist und das spitze Ende des zylindrischen Elements drehbar anpassbar hält.

Aus der JP 2004-351516 A ist eine Lasermarkierungsvorrichtung bekannt. In einem Gehäuse ist eine Laserstrahlquelle angeordnet und als Laserstrahlemissionseinheit ausgebildet. Ein Galvanoscanner ist in einem weiteren Gehäuse angeordnet und als Scanneinheit ausgebildet. In noch einem weiteren Gehäuse ist eine Steuereinheit angeordnet. Die Laserstrahlemissionseinheit, die Abtasteinheit und die Steuereinheit können entsprechend jeweils durch gleiche oder gleichartige Einheiten ihrer Art ersetzt werden.

Aus der US 4,230,902 ist ein Laserdrucksystem mit einer Vielzahl von Modulen bekannt, wobei eines der Module einen Laser, einen Modulator und Teile des optischen Systems umfasst, wobei ausgegebenes Licht des Moduls auf einen drehenden Scanner geleitet wird. Die Komponenten des Moduls sind an einem gemeinsamen Basiselement befestigt, um relative Bewegungen zwischen den Komponenten sowie die Ausrichtung zwischen der Laserstrahlausgabe und einer zylindrischen Linse zu minimieren, wobei die zylindrische Linse ein Element der Moduloptik ist und wobei diese im Wesentlichen so gehalten wird, dass eine Energieverteilung des Laserstrahls, der auf ein Aufzeichnungsmedium fokussiert ist, entlang einer Abtastlinie auf ihrem optimalen Wert gehalten wird. Falls der Laser oder andere Komponenten des Moduls kaputt gehen, wird das Modul entfernt und durch ein ähnliches Modul ersetzt. Eine kritische Ausrichtung zwischen dem Laserstrahl und der zylindrischen Linse kann hierdurch aufrechterhalten werden. Das ausgetauschte Modul passt in einen korrespondierenden angepassten Abschnitt des Laserdrucksystems, sodass der vom Modul ausgegebene Strahl seine relative Ausrichtung zu den Systemkomponenten außerhalb des Moduls beibehält.

Aus der US 6,519,387 B1 sind eine Abbildungsaufzeichnungsvorrichtung und eine optische Faser bekannt, mit denen man abtastende Strahlpunkte erhalten kann, die Konfigurationen aufweisen, welche sich in einer langgestreckten Weise in einer Unterabtastrichtung erstrecken und welche rechteckig sind und welche für eine Aufzeichnung auf einem hitzeartigen photoempfindlichen Aufzeichnungsmaterial verwendet werden können. Die Abbildungsaufzeichnungsvorrichtung zeichnet eine Abbildung auf, indem mit einem Lichtstrahl beleuchtet wird, der von einem Beleuchtungskopf, der mit einem Halbleiterlaser über eine optische Faser verbunden ist, ausgegeben wird. In einer Abbildungsaufzeichnungsvorrichtung weist die optische Faser einen Kern auf, welcher eine Querschnittsform aufweist, die in einer Richtung senkrecht zur optischen Achse des Lichtstrahls eine langgestreckte und rechteckige Gestalt aufweist. Die Abbildung wird mittels einer Fokussierlinse fokussiert, sodass eine kurze Richtung des Lichtausgabeabschnitts der optischen Faser entlang der Hauptabtastrichtung des Aufzeichnungsmediums orientiert ist.

Aus der WO 03/065102 A1, der DE 10 2006 055 595 A1, der US 2003/0031451 A1, der WO 02/075398 A1 sowie der US 4,920,364 sind Gegenstände zur Abschwächung von Laserstrahlung bekannt.

Aus der US 3,189, 342 ist eine Vorrichtung zum Sortieren kartenartiger Gegenstände bekannt. Die Vorrichtung umfasst eine Plattform, auf der eine Karte mit ihrer Kante angeordnet werden kann, ein erstes Ablenkelement, welches an der Plattform befestigt ist und geneigt ist, sodass es einen Fallweg der Karte von der Plattform auf einer Seite kreuzt, und ein zweites Ablenkelement, welches in derselben allgemeinen Richtung wie das erste Ablenkelement geneigt ist und die Ebene, in der die Karte auf der Plattform angeordnet ist, unter der Plattform kreuzt, wobei die Ablenkelemente eine Ablenkanordnung bilden, welche manuell hin- und herbewegt werden kann, um alternativ eine Ablenkung einer fallende Karte durch das erste Ablenkelement oder das zweite Ablenkelement in unterschiedliche Stapel zu bewirken.

Der Erfindung liegt somit die Aufgabe zugrunde, eine leichter zu handhabende Laserindividualisierungsvorrichtung und ein verbessertes Laserindividualisierungssystem zu schaffen, deren sicherheitsrelevante Komponenten vorzugsweise besser zu schützen sind.

Insbesondere besteht die Aufgabe darin, für eine solche Laserindividualisierungsvorrichtung und ein Laserindividualisierungssystem eine verbesserte Fähigkeit zum Markieren von Strukturen unterschiedlicher Strukturgrößen sowie insbesondere hierfür eine Vorrichtung zur Abschwächung von Laserstrahlung für eine Laserindividualisierungsvorrichtung zu schaffen.

### Grundgedanke der Erfindung

Neben einer Speicherung von Informationen in Form von alphanumerischen Zeichen, Symbolen und Bildern, welche mit dem menschlichen Auge ohne Zuhilfenahme von Hilfsmitteln erfassbar sind, können in Sicherheits- und/oder Wertdokumenten auch Informationen in Form von Mikroschrift und/oder Mikrosymbolen, Zahlen oder Zeichen gespeichert werden. Die hierfür erforderlichen Strukturgrößen der Wechselwirkungszonen mit der Laserstrahlung lassen sich in der Regel nicht mit der Laserleistung oder Pulsenergie bewerkstelligen, welche für eine zeitsparende Laserbeschriftung mit für das menschliche Auge wahrnehmbaren Schriftzeichen, Ziffern und Symbolen notwendig ist.

In der Regel werden als Laserstrahlerzeugungseinrichtungen solche verwendet, welche eine gepulste Laserstrahlung erzeugen. Für eine zeitsparende Markierung ist es vorteilhaft, eine Pulsenergie der einzelnen Laserpulse so zu wählen, dass mit Hilfe eines einzigen Laserpulses ein Zeichenbestandteil eines alphanumerischen Zeichens erzeugt werden kann, der die Abmessungen einer charakteristischen Linienbreite der jeweiligen Schrifttype aufweist. Um Mikroschrift zu erzeugen, ist es jedoch notwendig, sehr viel feinere Strukturen zu erzeugen. Daher ist es notwendig, eine Pulsenergie bzw. bei einem cw-Laser eine Laserleistung entsprechend zu reduzieren. Eine Möglichkeit hierzu besteht darin, die Laserleistung oder Pulsenergie bei der Erzeugung der Laserstrahlung zu verringern. Dies führt jedoch dazu, dass ein in der Laserstrahlerzeugungseinrichtung genutzter Laser in der Regel nicht bei seinem optimalen Arbeitspunkt betrieben werden kann. Darüber hinaus treten thermische Schwankungen in dem Laser auf, welche die optischen Eigenschaften der Laserstrahlung in der Regel nachteilig beeinflussen.

Es wird daher vorgeschlagen, in dem Funktionsmodulgehäuse eine Abschwächungseinheit vorzusehen, die relativ zu dem Strahlengang bewegbar ist oder durch die der Strahlengang wahlweise führbar ist, beispielsweise über schwenkbare Spiegel, wobei die Abschwächungseinheit zwei hinsichtlich ihrer Festkörpereigenschaften möglichst identisch beschaffene, planparallele Oberflächen aufweisende und zueinander unter 90° bezüglich der planparallelen Oberflächen orientierte Körper, beispielsweise Prismen, umfasst, wobei zumindest eine der Oberflächen teilverspiegelt ausgebildet ist und die Abschwächungseinheit so in den Strahlengang bewegbar ist oder der Strahlengang so durch die Abschwächungseinheit führbar ist, dass die Laserstrahlung im Wesentlichen unter einem 45°-Winkel bezüglich der planparallelen Oberflächen der Körper orientiert ist. Eine solche Abschwächungseinheit sorgt dafür, dass zumindest an der teilverspiegelten Oberfläche ein Intensitätsanteil, beispielsweise 80 % der Laserintensität aus dem Strahlengang ausgespiegelt wird. Eine Verwendung von zwei jeweils planparallele Außenflächen aufweisenden Körpern, welche exakt unter 90° zueinander ausgerichtet sind, bietet den Vorteil, dass durch Brechungseffekte herbeigeführte Strahlversetze in den Körpern kompensiert werden.

Durch die Ausspiegelung eines vorgegebenen Anteils der Laserleistung bzw. der Pulsenergie der Laserstrahlung wird die Möglichkeit geschaffen, so genannte Mikroschrift zum Speichern von Informationen in dem Dokument zu erzeugen. Als Mikroschrift wird eine aus alphanumerischen Zeichen bestehende Information bezeichnet, deren alphanumerische Zeichen Abmessungen im Mikrometerbereich, beispielsweise unter 0,5 mm, vorzugsweise unter 0,4 mm, insbesondere unter 0,3 mm, aufweisen.

### Bevorzugte Ausführungsformen

Gemäß einer Ausführungsform wird eine Abschwächungsvorrichtung in einer Laserindividualisierungsvorrichtung geschaffen welche wahlweise in einen nicht-abschwächenden Zustand und mindestens einen abschwächenden Zustand versetzbar ist, wobei auf die Abschwächungsvorrichtung geführte Laserstrahlung im nichtabschwächenden Zustand ungeschwächt und in dem mindestens einen abschwächenden Zustand abgeschwächt aus der Abschwächungsvorrichtung austritt, wobei die Abschwächungsvorrichtung eine Abschwächungseinheit und Strahlführungsmittel umfasst, wobei die Abschwächungseinheit zwei hinsichtlich ihrer Festkörpereigenschaften identisch beschaffene, planparallele Oberflächen aufweisende und zueinander unter 90° bezüglich der Oberflächen orientierte Körper umfasst, und wobei zumindest eine der Oberflächen teilverspiegelt ausgebildet ist, und die Strahlführungsmittel ausgebildet sind, in dem abschwächenden Zustand eine Strahlführung in der Wiese zu bewirken, dass die Laserstrahlung durch die Abschwächungseinheit tritt, wobei die planparallelen Oberflächen eine Orientierung von nahezu 45°gegenüber der Laserstrahlung aufweisen, oder in dem nichtabschwächenden Zustand einer Strahlführung des Strahlengangs an der Abschwächungseinheit vorbei herbeizuführen.

Die Körper, welche in der Abschwächungseinheit zum Einsatz kommen, müssen eine gewisse Transmission der Laserstrahlung zulassen. Um eine Erwärmung der Körper in Betrieb aufgrund des Durchtritts von Laserstrahlung durch die Körper zu minimieren, sind Körper bei einer bevorzugten Ausführungsform für die Laserstrahlung transparent.

Bei einer Ausführungsform umfassen die Strahlführungsmittel einen Stellantrieb, mittels dessen die Abschwächungseinheit alternativ in den Strahlengang hinein oder heraus schwenkbar oder mittels dessen die Abschwächungseinheit alternativ in den Strahlengang hinein oder herausfahrbar ist. Obwohl diese Ausführungsformen mechanische Elemente umfassen, nämlich die Abschwächungseinheit, welche mechanisch zu bewegen sind, lässt sich die Abschwächungsvorrichtung insgesamt sehr robust ausführen. Wird eine geeignete Führung für die Abschwächungseinheit gewählt, die sehr geringe mechanische Toleranzen hinsichtlich einer Orientierung der Abschwächungseinheit relativ zu dem Strahlengang zulässt, so kann ein zuverlässiger Durchtritt durch die Abschwächungseinheit garantiert werden, ohne dass Justagen der Strahlführung durch einen Fachmann notwendig wären. Aufgrund der Tatsache, dass die beiden Körper jeweils planparallele Oberflächen aufweisen und die Körper selbst bezüglich der Oberflächen exakt unter 90° orientiert sind, erfolgt jeweils ein gerader versatzfreier Durchtritt durch die Abschwächungseinheit, sofern der Strahlengang 45° gegenüber den planparallelen Oberflächen beim Eintritt orientiert ist. Kleinere Abweichungen von einigen Grad sind hierbei tolerierbar. Bei Abweichungen ändert sich jedoch die Richtung, unter der die ausgespiegelte Leistung oder Intensität zu absorbieren ist. Hierfür sind geeignete Absorber vorzusehen, die gegebenenfalls zu kühlen sind. Ebenso wäre es möglich, das ausgespiegelte Licht gänzlich abzuführen. In einer Laserindividualisierungseinrichtung ist dies jedoch in der Regel nicht möglich, so dass die ausgespiegelte Leistung an einem Absorber absorbiert wird.

Bei einer bevorzugten Ausführungsform ist der Stellantrieb ein Linearantrieb. Eine Anordnung, welche einen Linearantrieb verwendet, ist besonders einfach zu realisieren, da beispielsweise gerade Führungen für die Abschwächungseinheit verwendet werden können, um die relative Orientierung bezüglich des Strahlengangs der einzelnen Komponenten der Abschwächungseinheit zu gewährleisten.

In manchen Situationen ist es wünschenswert, mittels der Abschwächungsvorrichtung unterschiedliche Abschwächungsgrade realisieren zu können. Dies kann dadurch erreicht werden, dass die Oberfläche, welche zum Ausspiegeln eines Teils der Leistung der Laserstrahlung verwendet wird, an unterschiedlichen Positionen eine unterschiedliche Reflektivität aufweist. Bei einer Ausführungsform ist daher vorgesehen, dass eine Reflektivität der zumindest einen Oberfläche ortsabhängig variiert, und die Strahlführungsmittel so steuerbar sind, dass eine Durchtrittsposition der Laserstrahlung durch die zumindest eine Oberfläche gesteuert wählbar und hierüber ein Grad der Abschwächung einstellbar ist. Der Grad der Abschwächung kann somit mittels der mechanischen Positionierung der Abschwächungseinheit im Strahlengang variiert werden. Wird beispielsweise ein Linearantrieb verwendet, so findet eine Verschiebung der Abschwächungseinheit senkrecht zur Strahlachse der Laserstrahlung statt. Je nachdem, wie "weit" die Abschwächungseinheit in den Strahlengang hineingefahren wird, wird die Laserstrahlung schwächer oder stärker abgeschwächt. In der Regel wird eine Ausgestaltung so vorgenommen, dass die Abschwächung zunimmt, je weiter die Abschwächungseinheit in den Strahlengang hineingefahren wird.

Eine alternative oder zusätzliche Möglichkeit der Variation der Abschwächung kann dadurch erreicht werden, dass eine weitere der Oberflächen des Körpers teilverspiegelt wird. Hierbei wird die Teilverspiegelung jedoch nicht vollflächig ausgeführt, so dass es möglich ist, den Strahlengang durch die Abschwächungseinheit so zu führen, dass eine Ausspiegelung eines Teils der Leistung in einer Stellung nur an der mindestens einen teilverspiegelten Oberfläche erfolgt und in einer anderen Stellung eine Ausspiegelung sowohl an der zumindest einen teilverspiegelten Oberfläche als auch an der weiteren teilverspiegelten Oberfläche erfolgt. Eine Ausführungsform sieht somit vor, dass zusätzlich zu der zumindest einen teilverspiegelten Oberfläche eine weitere der planparallelen Oberflächen teilverspiegelt ist, wobei sich deren Teilverspiegelung nicht über die gesamte flächige Ausdehnung der weiteren Oberfläche erstreckt, und die Strahlführungsmittel so steuerbar sind, dass eine Durchtrittsposition der Laserstrahlung durch die zumindest eine weitere Oberfläche gesteuert wählbar und hierüber ein grad der Abschwächung einstellbar ist.

An dieser Stelle wird noch einmal hervorgehoben, dass der Begriff "teilverspiegelt" bedeutet, dass nur ein Teil der auftreffenden Lichtleistung reflektiert wird und ein Teil der auftreffenden Lichtleistung transmittiert wird. Eine teilverspiegelte Oberfläche lässt somit einen Teil des Lichts passieren. Hiervon zu unterscheiden ist eine nicht vollflächig ausgeführte Verspiegelung, welche nur ein bestimmtes Gebiet einer Oberfläche verspiegelt. Eine so behandelte Oberfläche wird im Zusammenhang mit hier beschriebenen Erfindung nicht als teilverspiegelt bezeichnet, sondern als teilflächig verspiegelt bezeichnet. Sehr wohl kann der Flächenanteil, der verspiegelt ist, teilverspiegelt sein, d.h. eine Reflektivität kleiner 100 % aufweisen, so dass ein nennenswerter Anteil des Lichts, der auf den so verspiegelten Flächenanteil auftrifft, transmittiert wird.

Ein weiterer Aspekt sieht vor, die einzelnen Komponenten der Laserindividualisierungsvorrichtung in unterschiedliche Module aufzuteilen, die in abgeschlossenen Modulgehäusen angeordnet sind und im betriebsfähigen Zustand auf einfache Weise miteinander verbindbar und wieder lösbar sind, um einzelne Modulgehäuse austauschen und/oder entfernen zu können, beispielsweise um diese außerhalb von Betriebsstunden in einer Sicherungseinrichtung verwahren zu können.

Insbesondere wird eine Laserindividualisierungsvorrichtung für Dokumente vorgeschlagen, welche eine Steuereinrichtung, eine Laserstrahlerzeugungseinrichtung zum Erzeugen von Laserstrahlung sowie eine steuerbare Strahlführungseinrichtung zum durch die Steuereinrichtung gesteuerten Richten der Laserstrahlung auf mindestens ein Dokument umfasst, um über eine Laserwechselwirkung Individualisierungsinformationen in dem mindestens einen Dokument zu speichern, wobei die Laserindividualisierungsvorrichtung modular ausgebildet ist, indem die Laserstrahlerzeugungseinrichtung in einem Strahlerzeugungsmodulgehäuse und die steuerbare Strahlführungseinrichtung in einem getrennt von dem Strahlserzeugungsmodulgehäuse ausgebildeten Funktionsmodulgehäuse angeordnet sind, wobei das Funktionsmodulgehäuse und das Strahlerzeugungsmodulgehäuse strahlungstechnisch lösbar miteinander verbunden sind oder verbindbar sind, wobei das Funktionsmodulgehäuse oder das Strahlerzeugungsmodulgehäuse eine Abschwächungsvorrichtung, wie sie oben beschrieben ist, umfasst. Hierbei werden als getrennt ausgebildete Modulgehäuse solche Gehäuse angesehen, die im fertigen Betriebszustand das jeweilige Modul unmittelbar gegen Umwelteinflüsse schützen. Mit einem Verbinden ist hiermit somit nicht ein Anordnen eines Modulgehäuses in einem anderen Modulgehäuse gemeint. Mit der Aussage: "lösbar miteinander verbunden sind oder verbindbar sind" ist somit gemeint, dass die unterschiedlichen Modulgehäuse in einem betriebsfertigen Zustand miteinander verbunden sind oder miteinander verbindbar sind. Im gelösten, nicht verbundenen Zustand können die verschiedenen Modulgehäuse unabhängig voneinander ausgetauscht und/oder relativ zueinander angeordnet werden, ohne das oder die jeweiligen anderen Modulgehäuse unmittelbar zu beeinflussen. "Strahlungstechnisch verbunden" bedeutet, dass über die ausgebildete Verbindung Strahlung von dem einen Modulgehäuse in das andere Modulgehäuse geleitet oder geführt werden kann.

Bei einer Ausführungsform ist vorgesehen, dass die lösbare Verbindung über ein erstes Kopplungselement und ein zweites Kopplungselement ausgebildet ist oder ausbildbar ist, die lösbar miteinander verbindbar sind oder verbunden sind, wobei das erste und das zweite Kopplungselement aufeinander abgestimmte Führungsmittel aufweisen, mittels derer sich in dem verbundenen Zustand eine reproduzierbare relative Positionierung der Kopplungselemente zueinander ergibt. Ein Vorteil hieran ist, dass in dem betriebsfertigen Zustand die einzelnen Kopplungselemente getrennt werden können und anschließend wieder miteinander verbunden werden können und dennoch nach dem Verbinden erneut ein betriebsbereiter Zustand erreicht ist, ohne dass eine aufwendige Justage, welche in der Regel von Fachpersonal ausgeführt werden muss, erforderlich ist.

Bei besonders bevorzugten Ausführungsformen weisen das erste Kopplungselement und das zweite Kopplungselemente jeweils eine Durchtrittsöffnung auf, durch die hindurch die Laserstrahlung im verbundenen Zustand der Kopplungselemente führbar ist bzw. geführt wird. Werden das erste Kopplungselement und das zweite Kopplungselement mittels der Führungsmittel beim Verbinden reproduzierbar relativ zueinander positioniert, so wird hierdurch gewährleistet, dass auch die Durchtrittsöffnungen, durch die die Laserstrahlung hindurchtritt, reproduzierbar relativ zueinander ausgerichtet werden bzw. sind.

Besonders bevorzugt werden die Durchtrittsöffnungen jeweils im Wesentlichen kreisförmig ausgebildet und weisen die Führungsmittel des ersten Kopplungselements und des zweiten Kopplungselements jeweils Zentrierelemente auf, über die die Durchtrittsöffnungen der Kopplungselemente im verbundenen Zustand zueinander zentriert sind oder beim Verbinden zentrierbar sind. Eine gute Zentrierung erhält man bei Kopplungselementen, die als Flansche ausbildet sind, vorzugsweise als im Wesentlichen eine kreisförmige Verbindungs- oder Berührungsfläche aufweisende Flansche ausgebildet sind, welche in ihrer Mitte, vorzugsweise in einem Mittelpunkt eine bezüglich des Mittelpunkts zentrierte Durchtrittsöffnung aufweisen. Als Verbindungs- oder Berührungsfläche werden jene Flächen der Flansche bezeichnet, die im verbundenen Zustand dem jeweils anderen Flansch, d.h. dem jeweils anderen Kopplungselement zugewandt sind. Zentrierungselemente sind vorzugsweise als kreisförmige Nuten oder Vorsprünge, welche vorzugsweise rotationssymmetrisch zu einem Mittelpunkt des Flansches bzw. einem Mittelpunkt der jeweiligen Durchtrittsöffnung ausbildet. Diese Zentrierelemente können so ausgebildet sein, dass ein Zentrierelement des einen Kopplungselements, beispielsweise des ersten Kopplungselements, aus einer Flanschebene vorspringt und in ein als Vertiefung in der Flanschebene des anderen, beispielsweise zweiten Kopplungselements, ausgebildetes Zentrierelement eingreift. Ebenso sind Ausführungsformen denkbar, bei denen die Zentrierelemente der Flansche in beiden Flanschen als Vertiefungen bezüglich der jeweiligen Flanschebene ausgebildet sind und beim Verbinden der Kopplungselemente ein Zentrierring verwendet wird, der zu einem Teil in das in dem einen Kopplungselement als Vertiefung ausgebildete Zentrierelement und zum anderen Teil in das ebenfalls als Vertiefung in der Flanschebene des anderen Kopplungselements ausgebildete Zentrierelement eingreift.

In der Regel ist es jedoch nicht möglich, sicherzustellen, dass ein Durchtritt der Laserstrahlung durch einen Mittelpunkt der Durchtrittsöffnungen erfolgt. Somit ist eine Anordnung der Kopplungselemente relativ zueinander nicht rotationsinvariant. Auch in Fällen, in denen die Laserstrahlung eine lineare Polarisation aufweist und diese hinsichtlich des Wechselwirkungsvorgangs oder der Strahlführung von Bedeutung ist, können die beiden Kopplungselemente nicht rotationsinvariant miteinander verbunden werden. Daher ist bei einer Ausführungsform vorgesehen, dass die Kopplungselemente asymmetrisch ausgebildete Befestigungs- und/oder Führungsmittel umfassen, so dass die Kopplungselemente nur in einer Orientierung miteinander lösbar verbindbar sind. Eine solche Ausführungsform ist auch ohne ein Vorhandensein von Zentrierelementen ausführbar.

Bei einer solchen Ausführungsform erfolgt ein Eintritt der Laserstrahlung in die Strahlführungseinrichtung des Funktionsmodulgehäuses hinsichtlich Eintrittsposition und Eintrittsrichtung bzw. -orientierung jeweils in derselben Weise auch nach einem Lösen und erneuten Verbinden der Kopplungselemente.

Eine besonders flexible Anordnung der verschiedenen Modulgehäuse relativ zueinander, sogar im Betrieb, ist möglich, wenn das Strahlerzeugungsmodulgehäuse und das Funktionsmodulgehäuse mittels eines Lichtleiters miteinander verbunden sind bzw. verbindbar sind. Eine solche Ausführungsform bietet sich insbesondere dann an, wenn die Laserstrahlerzeugungseinrichtung einen Faserlaser umfasst und die Laserstrahlung von einer solchen Laserstrahlerzeugungseinrichtung ohnehin in einem Lichtleiter bzw. an einer Austrittsfläche eines solchen Lichtleiters bereitgestellt wird, der aus der Laserstrahlerzeugungseinrichtung herausgeführt ist.

Andere Ausführungsformen können vorsehen, dass mittels Kopplungselemente ein Bajonettverschlusses ausgebildet ist. Bei einer solchen Ausführungsform können das Funktionsmodulgehäuse und das Strahlerzeugungsmodulgehäuse unmittelbar miteinander verbunden werden. Beispielsweise kann das Funktionsmodulgehäuse oberhalb des Strahlerzeugungsmodulgehäuses angeordnet werden, wobei ein Austritt der Laserstrahlung aus dem Strahlerzeugungsmodulgehäuse im Wesentlichen in vertikaler Richtung bei einer Anordnung auf einem ebenen Untergrund erfolgt. Ein solcher Bajonettverschluss kann auch im Zusammenhang mit einem Lichtleiter zur Anwendung kommen. Vorteilhafterweise sind die Bajonettverschlüsse jeweils so ausgebildet, dass die Kopplungselemente nur in genau einer Orientierung miteinander verbindbar sind.

In einer besonders bevorzugten Ausführungsform ist der Lichtleiter in dem ersten Kopplungselement arretiert öder arretierbar, so dass der Lichtleiter oder ein Lichtpfad, der aus dem Lichtleiter austretenden Laserstrahlung im Wesentlichen zentrisch durch die Durchtrittsöffnung geführt ist oder führbar ist. Bei einer Ausführungsform ist das erste Kopplungselement als Zuführflansch ausgebildet, in dem der Lichtleiter arretierbar ist oder arretiert ist und das zweite Kopplungselement ein Aufnahmeflansch, der in dem Funktionsmodulgehäuse angeordnet ist. Da der Aufnahmeflansch in sich starr ausgeführt sein muss und die Gehäusewände der einzelnen Modulgehäuse in der Regel aus Metallblechen oder dünnwandigen Kunststoff ausgebildet sind, kann der Aufnahmeflansch in der Regel nicht einstückig mit einer Gehäusewand ausgebildet werden. Daher ist es notwendig, den Aufnahmeflansch an einer Gehäusewand oder einer Struktur im Inneren des Funktionsmodulgehäuses zu befestigen. Die Befestigung ist vorzugsweise so ausgeführt, dass diese von einem Inneren des entsprechenden Modulgehäuses erfolgt. Beispielsweise kann ein Aufnahmeflansch in einer Gehäusewand eines Funktionsmodulgehäuses angeordnet sein und mit nur von einem Inneren des entsprechenden Modulgehäuses lösbaren Befestigungsmitteln, beispielsweise Schrauben, befestigt sein.

Nach einem weiteren Aspekt weist das Funktionsmodulgehäuse einen Drehtisch auf, der eine Dokumentaufnahme umfasst, welche beweglich so angeordnet ist, dass diese in eine Aufnahmestellung bewegbar ist, in der sich ein zugeführtes Dokument im Wesentlichen schwerkraftgetrieben in eine vordefinierte Dokumentenstellung in der Dokumentenaufnahme bewegt. Vorteilhaft hieran ist, dass die Dokumentenaufnahme, welche in dem Drehtisch ausgebildet ist, einfach und kompakt ausgebildet werden kann.

Bei einer Ausführungsform wird das Dokument, sobald es in die vordefinierte Dokumentenstellung in der Dokumentenaufnahme gefallen oder gerutscht ist, mittels eines magnetbetriebenen Arretierungselement in der vordefinierten Dokumentenstellung arretiert, so dass auch bei einer Bewegung der Dokumentenaufnahme das Dokument nicht wieder aus der Dokumentenaufnahme fallen kann oder seine vordefinierte Dokumentenstellung verlassen kann. Der Drehtisch und somit auch das in der Dokumentenaufnahme des Drehtisches angeordnete Dokument können während der Laserbeschriftung so bewegt werden, dass die Laserstrahlung unter unterschiedlichen Winkeln an ein und derselben Dokumentoberflächenposition auf das Dokument gerichtet werden kann. Sind auf der Dokumentoberfläche beispielsweise Mikrolinsen, beispielsweise in Form von Lentikularlinsen, ausgebildet, welches parallel zueinander orientierte Zylinderlinsen sind, so ist es möglich, unter unterschiedlichen Auftreffwinkeln unterschiedliche Informationen in dem Dokument zu speichern. Im fertig gestellten Dokument sind dann anschließend bei einem Verkippen entsprechend der verwendeten Verkippungen gegenüber der Laserstrahlung beim Schreiben, die unterschiedlichen in dem Dokument gespeicherten Informationen wahrnehmbar. Hierüber sind beispielsweise so genannte Kippbilder oder Ähnliches zu realisieren, welche im Stand der Technik auch unter den Begriffen CLI (changeable laser image) bzw. MLI (multiple laser image) bekannt sind.

Da bei einer Wechselwirkung der Laserstrahlung mit dem Material eines Dokumentenrohlings bzw. Dokuments zum Teil Material von dem Dokumentenrohling abgetragen wird und/oder chemische Reaktionen ausgelöst werden, die zur Freisetzung von Gasen führen, ist bei einer bevorzugten Ausführungsform eine Absaugeinrichtung in dem Funktionsmodul vorgesehen.

Gemäß einem weiteren Aspekt ist vorgesehen, dass die Absaugeinrichtung einen Absaugkanal umfasst, in dem eine schwenkbar um eine quer zur Durchströmungsrichtung des Absaugkanals ausgerichtete Achse gelagerte, in einem Ruhezustand, d.h. einem nicht ausgelenkten Zustand, in dem keine Fluidströmung in dem Absaugkanal vorherrscht, in den Strömungsweg des Absaugkanals hineinragende Klappe angeordnet ist, und ein Sensor im oder an dem Schwenkbereich der Klappe angeordnet ist, mittels dessen eine Auslenkung der Klappe bei einer Fluidströmung während einer Absaugung von Fluid erfassbar ist. Beispielsweise kann die Klappe flächig so ausgebildet sein, dass sie einen festgelegten vorgegebenen Prozentanteil einer Querschnittsfläche des Absaugkanals im nicht ausgelenkten Zustand "blockiert". An der Klappe ist bei einer bevorzugten Ausführungsform senkrecht zur Fläche der Klappe, die einen Teil der Querschnittsfläche des Absaugkanals "blockiert", eine senkrecht vorspringende Nase angebracht oder ausgebildet, die im ausgelenkten Zustand in einen Erfassungsbereich eines induktiven Sensors geschwenkt wird und hierüber ein Signal in dem Induktionssensor auslöst. Dieses Signal kann beispielsweise als Interlocksignal oder Sperrsignal für die Laserstrahlerzeugungseinrichtung genutzt werden. Dies bedeutet, dass eine Laserstrahlerzeugung nur möglich ist, wenn über das von dem Sensor erzeugte Signal angezeigt wird, dass die Absaugeinrichtung in Betrieb ist, und eine Absaugung von Fluid folgt. Hierdurch kann vermieden werden, dass eine Wechselwirkung der Laserstrahlung mit einem Dokumentmaterial zu einem Zeitpunkt stattfindet, an dem keine Absaugung erfolgt und somit vermieden werden, dass freigesetzte Gase und/oder abgetragene Bestandteile des Dokuments eine Optik der Strahlführungseinrichtung verschmutzen oder beschädigen können. Die beschriebene Anordnung stellt eine Strömungsdetektionseinrichtung dar. Bei geeigneter Auslegung kann erreicht werden, dass ein Interlock- oder Freigabesignal nur bei ausreichendem Fluiddurchsatz ausgegeben wird. Eine Einstellung kann über die Festlegung der Fläche der Klappe im Verhältnis zu deren Masse oder eine einstellbare Feder erfolgen, die die Klappe in die nicht ausgelenkte Stellung zurücktreibt.

Wie auch bei anderen Produktionsverfahren können bei der Laserpersonalisierung Fehler auftreten, so dass einzelne individualisierte Dokumente nicht den gewünschten Qualitätsanforderungen entsprechen. Wünschenswert ist es, solche fehler- oder mangelhaften Dokumente unmittelbar im Produktionsprozess zu selektieren und auszusondern. Da die Dokumente während der Laserpersonalisierung, insbesondere wenn sie über ein CLI/MLI ausgeführt wird, an bereits vereinzelten Dokumenten ausgeführt wird, ist es sinnvoll, die Dokumente unmittelbar nach der Individualisierung hinsichtlich ihrer Qualitätseigenschaften zu prüfen und gegebenenfalls auftretende fehlerhafte Dokumente zu selektieren und auszusondern. Dies ist insbesondere dann notwendig, wenn die Individualisierung der letzte Bearbeitungsschritt vor einer Ausgabe des Dokuments an einen Nutzer ist. Eine solche Qualitätskontrolle wird in der Regel optisch vorgenommen, bei der geprüft wird, ob die mittels dem Dokument auslesbaren Informationen mit jenen übereinstimmen, die in das Dokument eingeschrieben werden sollten, und ob diese an der richtigen Position angeordnet sind usw.

Um diese Dokumentselektion durchzuführen, wird eine Dokumentselektionseinrichtung vorgeschlagen, die besonders vorteilhaft im Zusammenhang mit der hier beschriebenen Laserindividualisierungsvorrichtung verwendet werden kann, jedoch eine eigenständige Erfindung verkörpert und auch ohne die zuvor beschriebenen einzelnen Merkmale der Laserindividualisierungseinrichtung in einer andersartig ausgebildeten Dokumentherstellungsvorrichtung zum gezielten Selektieren einzelner Dokumente eingesetzt werden kann. Die Ausgestaltung soll hierbei möglichst einfach und ohne eine große Anzahl beweglicher komplizierter Komponenten ausgeführt sein, so dass die Selektionseinrichtung wartungsfrei über lange Zeiträume betrieben werden kann.

Es wird somit eine Dokumentenselektionseinrichtung vorgeschlagen, welche umfasst mindestens zwei Sammeleinrichtungen, welche auch als Magazine bezeichnet werden, zum Aufnehmen von Dokumenten, eine Aufnahmeöffnung zum Zuführen von vereinzelten Dokumenten und Dokumentführungsmittel zum wahlweisen Leiten des zugeführten Dokuments zu einem der mindestens zwei Sammeleinrichtungen (Magazine), wobei die Dokumentführungsmittel zwei Dokumentführungspfade zwischen der Aufnahmeöffnung und den mindestens zwei Sammeleinrichtungen bilden und wobei die Dokumentführungsmittel einen beweglichen Weichenabschnitt und einen Dokumentführungsabschnitt umfassen, wobei der Weichenabschnitt in einer geschlossenen Stellung mit dem Dokumentführungsabschnitt eine gegenüber einer Vertikalen und einer Horizontalen geneigte Gleitstrecke eines der mindestens zwei Dokumentenführungspfade bildet, so dass ein zugeführtes Dokument schwerkraftgetrieben die (gesamte) Gleitstrecke entlang gleitet oder rutscht, und anschließend zu der einen der mindestens zwei Sammeleinrichtungen (Magazine) geleitet wird, und wobei in einer geöffneten Stellung ein Spalt in dieser Gleitstrecke entsteht, der sich quer zu einer Gleitrichtung erstreckt, so dass ein in die Gleitstrecke eintretendes Dokument beim schwerkraftgetriebenen Gleiten durch den ausgebildeten Spalt hindurch tritt und die Gleitstrecke hier hindurch verlässt, und so entlang eines anderen der mindestens zwei Dokumentführungspfade schwerkraftgetrieben zu einer anderen der mindestens zwei Sammeleinrichtungen (Magazine) geleitet wird. Eine so ausgebildete Dokumentenselektionseinrichtung kann beispielsweise als Ausgabeeinrichtung in der oben beschriebenen modularen Laserindividualisierungsvorrichtung eingesetzt werden. Ein Vorteil dieser Dokumentenselektionseinrichtung ist es, dass die Dokumente schwerkraftgetrieben entlang der in der Dokumentenselektionseinrichtung ausgebildeten Dokumentenführungspfade in die entsprechenden Sammeleinrichtungen, beispielsweise ein Gutfach und ein Schlechtfach, welche auch als Ausgabemagazin und Ausschussmagazin bezeichnet werden können, bewegen.

Bei einer bevorzugten Ausführungsform ist die die Dokumentenselektionseinrichtung mit einer Antriebeinrichtung gekoppelt, die den Weichenabschnitt zwischen der geschlossenen und der geöffneten Stellung bewegt. Der Antrieb kann beispielsweise als Magnetantrieb ausgebildet sein.

Bei einer bevorzugten Ausführungsform umfasst der Weichenabschnitt einen Rahmen, der schwenkbar gelagert ist und in der geschlossenen Stellung einen Streckenabschnitt der geneigten Gleitstrecke ausbildet. Der Rahmen kann beispielsweise U-förmig ausgebildet sein, wobei bei einer Ausführungsform das offene Ende des U durch eine physikalisch ausgebildete Drehachse geschlossen wird. Bei anderen Ausführungsformen können die offenen Schenkel von der Achse wegweisen.

Um das durch den Rahmen wirkende Drehmoment auf die Achse zu minimieren und zumindest teilweise zu kompensieren, ist bei einigen Ausführungsformen ein zweiter Rahmen vorgesehen, der jedoch nicht zum Ausbilden der Gleitstrecke verwendet wird. Dieser ist somit nicht unter 180° gegenüber dem einen Rahmen an der Achse befestigt, sondern unter einem Winkel von weniger als 180°.

Eine besonders kompakte Bauform der Dokumentenselektionseinrichtung umfasst zwei einender gegenüberliegende und voneinander beabstandete Seitenflächen, die die mindestens zwei Dokumentführungspfade seitliche begrenzen. Eine Breite quer zur Gleitrichtung der Dokumente stimmt somit im Wesentlichen mit einer Dokumentenbreite zuzüglich einer Wandstärke der Seitenwände überein. Lediglich der Stellantrieb wird in der Regel als einziges Element deutlich über die Seitenwände hinausragen.

Besonders gute Gleiteigenschaften und ein geringes Risiko für Beschädigungen, insbesondere in einem zentralen Bereich der Dokumente, welche selektiert werden, erhält man bei einer Ausführungsform, bei denen die Gleitflächen nicht vollflächig ausgebildet sind, sondern lediglich vorzugsweise an den Rändern der Gleitstrecke angeordnete schienenartige Elemente aufweist. Bei einer Ausführungsform ist vorgesehen, dass der Führungsabschnitt der geneigten Gleitstrecke entlang der gegenüberliegenden Seitenflächen angeordnete Schienenelemente umfasst, die nicht die gesamte Gleitstrecke quer zur Gleitrichtung überspannen.

Einen sicheren und zuverlässigen Übergang der Dokumente und ein besonders gutes Gleiten der Dokumente auf der geneigten Gleitstrecke bei geschlossenem Weichenabschnitt erhält man bei einer Ausführungsform, bei der der Rahmen des Weichenabschnitts sich in der geschlossenen Stellung teilweise zwischen den an den gegenüberliegenden Seitenflächen angeordneten Schienenelementen befindet und sich die Gleitflächen des Rahmens und der Schienenelemente in Gleitrichtung der geneigten Gleitstrecke teilweise überlappen.

Wie oben erwähnt, ist es vorteilhaft, eine Laserindividualisierungsvorrichtung so fortzubilden, dass das Funktionsmodulgehäuse eine Dokumentenselektionseinrichtung, wie oben beschrieben, umfasst, um die mindestens zwei Sammeleinrichtungen als Gutfach zum Aufnehmen erfolgreich personalisierter Dokumente und Schlechtfach für Ausschussdokumente zu verwenden.

Eine Laserindividualisierungsvorrichtung kann auch dadurch weitergebildet werden, dass das Funktionsmodulgehäuse oder das Strahlerzeugungsmodulgehäuse eine Abschwächungsvorrichtung, wie oben beschrieben, umfasst.

Besonders vorteilhaft ist es, eine Laserindividualisierungsvorrichtung zu einem Laserindividualisierungssystem zu erweitern, welches mehrere Funktionsmodule und somit Funktionsmodulgehäuse aufweist, die für eine Individualisierung unterschiedlicher Dokumente ausgebildet sind. Ein Funktionsmodul kann beispielsweise für die Handhabung von ID-1-Dokumenten ein anderes für die Handhabung von ID-3-Dokumenten geeignet sein. Die Funktionsmodulgehäuse können alternativ mit dem Strahlerzeugungsmodulgehäuse verbunden werden.

Vorteil modularer Laserindividualisierungsvorrichtungen und -systeme ist es, dass die einzelnen Modulgehäuse handlicher sind und daher einfacher in Tresoren oder anderen Sicherungseinrichtungen verwahrt werden können.

Die Erfindung wird nachfolgend anhand von Ausführungsbeispielen unter Bezugnahme auf eine Zeichnung näher erläutert. Hierbei zeigen:
- Fig. 1: eine schematische Darstellung einer modularen Laserindividualisierungsvorrichtung;
- Fig. 2: eine schematische Darstellung einer Laserstrahlerzeugungseinrichtung, welche mit einer Lichtleitfaser gekoppelt ist;
- Fig. 3a: eine isometrische Ansicht von Kopplungselementen, die miteinander verbunden sind und eine lösbare Verbindung ausbilden;
- Fig. 3b: eine Vorderansicht der miteinander verbundenen Kopplungselemente nach Fig. 3a;
- Fig. 3c: eine Draufsicht auf die miteinander verbundenen Kopplungselemente nach Fig. 3a;
- Fig. 3d: eine Seitenansicht der verbundenen Kopplungselemente der Fig. 3a;
- Fig. 4a: eine schematische perspektivische Ansicht eines Drehtisches;
- Fig. 4b: eine schematische Rückansicht des Drehtisches nach Fig. 4a;
- Fig. 5a: eine Strömungsdetektionseinrichtung in einem Absaugkanal in einer Ruhestellung;
- Fig. 5b: eine Strömungsdetektionseinrichtung nach Fig. 5a in einer Auslösestellung bei einer Fluidströmung in dem Absaugkanal;
- Fig. 6: eine Abschwächungseinheit, durch welche der Strahlengang geführt ist;
- Fig. 7a: eine perspektivische Ansicht einer Dokumentenselektionseinrichtung;
- Fig. 7b: eine schematische Seitenansicht der Dokumentenselektionseinrichtung nach Fig. 7b;und
- Fig. 7c: eine schematische Schnittansicht der Dokumentenselektionseinrichtung.

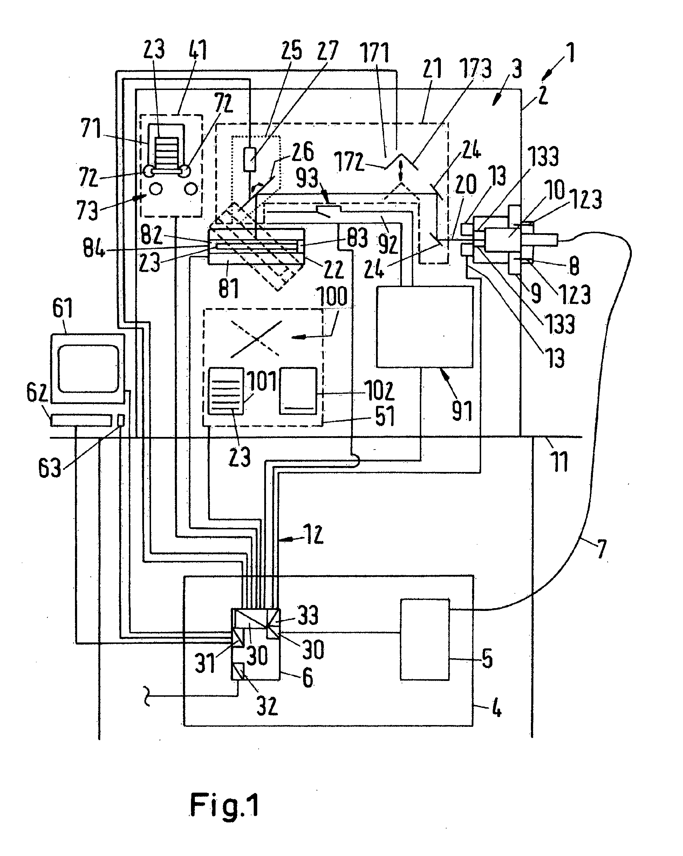

In Fig. 1 ist schematisch eine modulare Laserindividualisierungsvorrichtung 1 dargestellt. In der dargestellten Ausführungsform umfasst die Laserindividualisierungsvorrichtung 1 ein in einem Funktionsmodulgehäuse 2 angeordnetes Funktionsmodul 3 und ein Strahlerzeugungsmodulgehäuse 4, in dem eine Laserstrahlerzeugungseinrichtung 5 angeordnet ist. In dem Strahlerzeugungsmodulgehäuse 4 ist zusätzlich eine Steuereinrichtung 6 angeordnet, so dass das Strahlerzeugungsmodulgehäuse 4 zum Teil auch als Steuerungsmodulgehäuse bezeichnet wird. Die Laserstrahlerzeugungseinrichtung 5 ist ausgebildet, Laserstrahlung 20 für eine Wechselwirkung mit Dokumenten 23 zu erzeugen. In der Regel wird die Laserstrahlung 20 als gepulste Laserstrahlung erzeugt. Andere Ausführungsformen können jedoch auch vorsehen, dass die Laserstrahlung 20 als Dauerstrichstrahlung (cw-Strahlung) oder wahlweise alternativ als Dauerstrichstrahlung oder gepulste Strahlung erzeugt wird.

In der dargestellten Ausführungsform wird die Laserstrahlung 20 über eine Lichtleitfaser 7 von der Laserstrahlerzeugungseinrichtung 5 und somit dem Strahlerzeugungsmodulgehäuse 4 zu dem Funktionsmodulgehäuse 2 geleitet. Das Funktionsmodulgehäuse 2 und das Strahlerzeugungsmodulgehäuse, 4 sind somit über die Lichtleitfaser 7 miteinander verbunden. Über ein erstes Kopplungselement 8, welches an einem Faserkopf 10 der Lichtleitfaser 7 angeordnet ist, und ein zweites Kopplungselement 9, welches in dem Funktionsmodulgehäuse 2 angeordnet ist, wird eine lösbare Verbindung ausgebildet.

An dem zweiten Kopplungselement 9 sind darüber hinaus so genannte Interlockschalter 13 angeordnet, die überprüfen, ob der Faserkopf 10 in das zweite Kopplungselement 9, welches an dem Funktionsmodulgehäuse 2 befestigt ist, korrekt eingeführt ist. Nur wenn dies der Fall ist, werden die Interlockschalter 13 geschlossen, die in Sicherungsschaltkreise der Laserstrahlerzeugungseinrichtung eingebunden sind, um eine Laserstrahlerzeugung zu verhindern, solange der Faserkopf 10 nicht korrekt in das Funktionsmodulgehäuse 2 geführt ist.

Die dem Funktionsmodulgehäuse 2 zugeführte und über die Lichtleitfaser 7 geleitete Laserstrahlung 20 wird mittels einer Strahlführungseinrichtung 21 auf ein in einem Drehtisch 22 angeordnetes Dokument 23 gerichtet. Die Strahlführungseinrichtung 21 umfasst hierfür unterschiedliche optische Elemente, wie Justierspiegel 24 und mindestens eine aktiv steuerbare Ablenkeinrichtung 25, die beispielsweise als Galvanokopf ausgebildet ist. Schematisch ist die Ablenkeinrichtung 25 als drehbar gelagerter Spiegel 26, welcher mit einem Aktor 27 gekoppelt ist, dargestellt. Die Steuerung der Strahlführungseinrichtung 21 erfolgt über die Steuereinrichtung 6. Diese steuert ebenso die Laserstrahlerzeugungseinrichtung 5. Somit ist es möglich, die Laserstrahlung gezielt an unterschiedliche Positionen auf bzw. in dem Dokument 23 zu führen und hierüber individualisierende Informationen in dem Dokument 23 zu speichern. Individualisierende Informationen, die einer Person zugeordnet sind, werden als personalisierende Informationen bezeichnet.

Die Steuereinrichtung ist vorzugsweise analog zu einem Personalcomputer oder einer Workstation ausgebildet und umfasst als Kernbestandteil einen programmgesteuerten Prozessor, welcher mit Speichermitteln, beispielsweise in Form von Arbeitsspeicher und Festplattenspeicher gekoppelt ist. Zusätzlich umfasst die Steuereinrichtung Schnittstellen 30, um die Laserstrahlerzeugungseinrichtung 5, die Strahlführungseinrichtung 21, den Drehtisch 22, eine Vereinzelung- und Zuführeinrichtung 41, eine Ausgabeeinrichtung 51, welche auch als Dokumentenselektionseinrichtung bezeichnet ist, sowie eine Abschwächungseinheit 171 zu steuern. Ebenso sind vorzugsweise Schnittstellen 31 für ein Ein- und Ausgabemittel vorgesehen, beispielsweise einen Monitor 61, eine Tastatur 62 und ein Zeigergerät, beispielsweise eine Maus 63. Ferner kann die Steuereinrichtung 6 eine Schnittstelle 32 zum Empfangen von Daten, insbesondere der Individualisierungsdaten aufweisen. Diese können alternativ auch über die Tastatur und die Maus eingegeben werden oder mittels Wechselspeichermedien in Form von optischen Datenträgern und/oder nicht flüchtigen Speicherelementen, beispielsweise so genannten USB-Sticks oder Ähnliches, der Steuereinrichtung 6 bereitgestellt werden. Außerdem sind Schnittstellen 33 zum Empfangen von Interlock- und Sperr- oder Freigabesignalen vorhanden.

Die mit individuellen Informationen zu versehenden Dokumentenrohlinge bzw. Dokumente 23 werden in einem Eingabemagazin 71 der Vereinzelungs- und Zuführeinrichtung 41 als Dokumentenstapel bereitgestellt. An einem unteren Ende des Eingabemagazins 71 sind Walzen 72 angeordnet, die sich um ihre Längsachsen in entgegengesetzter Richtung drehen. Die Walzen weisen jeweils eine entlang der Achsrichtung verlaufende Nut in der Oberfläche auf. Die Nuten sind so bemessen, dass das unterste Dokument in die Nuten aufgenommen werden kann und durch die entgegengesetzte Drehbewegung der Walzen 72 durch die Walzen 72 "mitgenommen" wird und aus dem Eingabemagazin nach unten in eine Rollentransporteinrichtung 73 fällt. Die Walzen 72 dienen somit zur Vereinzelung der Dokumente 23. Die Rollentransporteinrichtung 73 transportiert das kartenartige Dokument 23 zu dem Drehtisch 22. Dieser umfasst einen rahmenartigen Halter 81, welcher an seinen Längsinnenseiten schienen- oder nutartige Führungen 82 aufweist. Der Halter 81 ist drehbar gelagert und kann in eine Aufnahmestellung verschwenkt werden, in der die Führungen 82 einen Neigungswinkel, von beispielsweise etwa 30°, gegenüber einer Vertikalen aufweist. Eine solche Stellung ist schematisch gestrichelt dargestellt. Die Rollentransporteinrichtung 73 führt das vereinzelte Dokument der Halterung in der Aufnahmestellung zu, so dass das Dokument 23 in den Führungen 82 schwerkraftgetrieben in eine vorbestimmte Dokumentenstellung in den Halter 81 hineingleitet. Auch andere Neigungswinkel, beispielsweise im Bereich zwischen 45°und 60°, sind verwendbar, solange eine schwerkraftgetriebene Anordnung des Dokuments in der vorbestimmten Dokumentenstellung in dem Halter erreicht wird. Die schienenartigen Führungen 82 sind so ausgebildet, dass das Dokument gegen einen Endanschlag 83 rutscht und anschließend mittels eines Hubmagneten (nicht dargestellt) in dieser Stellung in dem Halter 81 arretiert wird. Der Halter 81 des Drehtisches 23 kann nun in beliebige Richtungen gedreht werden, ohne dass sich das Dokument 23 in dem Halter 81 bewegt.

Um so genannte CLI/MLI-Informationen (changeable laser image/multiple laser image-Informationen) in dem Dokument speichern zu können, kann das Dokument während des Vorgangs des Erzeugens von Informationen mittels der Laserwechselwirkung in unterschiedliche Stellungen relativ zu der auftreffenden Laserstrahlung 20 bewegt werden. Dies bedeutet, dass durch Mikrolinsen, welche bereits in einer Dokumentenoberfläche des Dokuments 23 ausgebildet sind, unter unterschiedlichen Auftreffrichtungen der Laserstrahlung 20 bezüglich einer Oberflächennormale des Dokuments 23 unterschiedliche Informationen gespeichert werden können, die in dem fertigen Dokument aus unterschiedlichen Betrachtungsrichtungen sichtbar sind. Hierüber sind beispielsweise Kippbilder oder Ähnliches realisierbar.

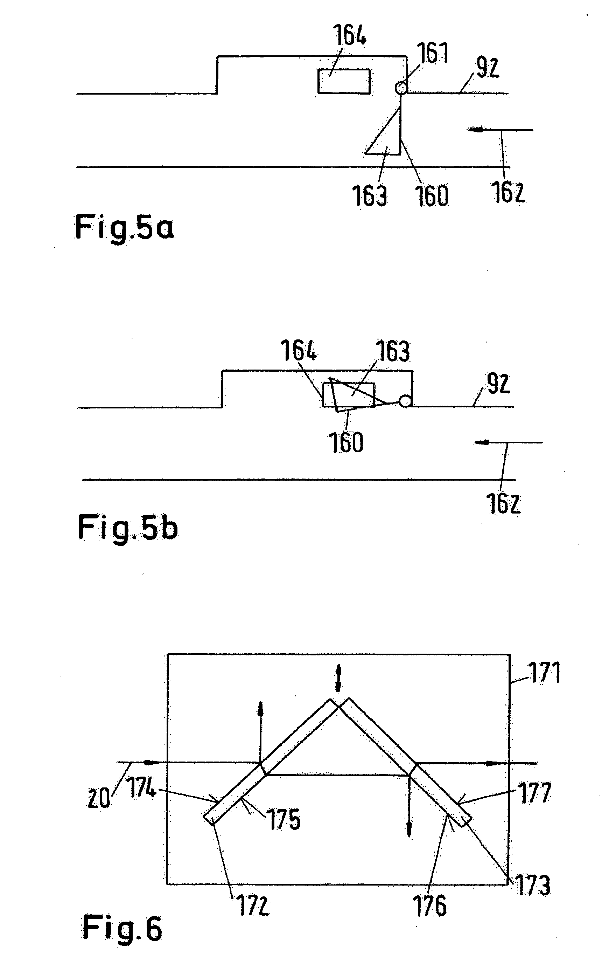

Während der Wechselwirkung der Laserstrahlung 20 mit dem Dokument 23 können sowohl aufgrund chemischer Reaktionen Gase entstehen als auch Material abgetragen werden. Um eine Verunreinigung der Optik der Strahlführungseinrichtung 21 zu verhindern und auch ein Entweichen der Gase aus dem Funktionsmodulgehäuse 2 zu verhindern, ist eine Absaugeinrichtung 91 vorgesehen. Die Absaugeinrichtung 91 umfasst einen Absaugkanal 92. In diesem ist eine Strömungsdetektionseinrichtung 93 ausgebildet, die im Zusammenhang mit Fig. 5 näher erläutert werden wird.

Nachdem das Dokument mit den individualisierenden Informationen versehen ist, wird der rahmenartige Halter 81 des Drehtisches 23 in eine Ausgabestellung verschwenkt, in der das Dokument nach dem Lösen der Arretierung schwerkraftgetrieben aus den schienenartigen Führungen 82 hinaus gleiten bzw. fallen kann. Über eine Weiche 100 wird das Dokument entweder in das Ausgabemagazin 101 gelenkt, aus oder mit dem die fertig individualisierten Dokumente 23 entnommen werden können, oder in ein Ausschussmagazin 102 gelenkt, in dem Dokumente 23 gesammelt werden, bei denen Fehler während der Individualisierung aufgetreten sind. Um solche Fehler zu detektieren, können Sensoren für die Qualitätssicherung in dem Funktionsmodulgehäuse 2 angeordnet sein, welche aus Gründen der Vereinfachung hier nicht dargestellt sind.

Würden die Steuereinrichtung 6, die Laserstrahlerzeugungseinrichtung 5 sowie die Einheiten, die im Funktionsmodulgehäuse 2 angeordnet sind, also die Vereinzelungs- und Zuführeinrichtung 41, der Drehtisch 22, die Ausgabeeinrichtung 51 (die auch als Dokumentenselektionseinrichtung bezeichnet wird), welche die Weiche 100, das Ausgabemagazin 101 und das Ausschussmagazin 102, die Abschwächungseinrichtung 171 sowie Strahlführungseinrichtung 21 und Absaugeinrichtung 91 alle gemeinsam in einem gemeinsamen Gehäuse angeordnet, so wäre dieses hinsichtlich seines Gewichts und seiner Abmessungen so beschaffen, dass dieses in einer Büro- und/oder Verwaltungsumgebung nur schwer handhabbar wäre. Durch die Aufteilung in unterschiedliche Module und Modulgehäuse, beispielsweise das Strahlerzeugungsmodulgehäuse 4 und das Funktionsmodulgehäuse 2, können die Abmessungen der einzelnen Gehäuse verringert und das Gesamtgewicht auf mehrere Modulgehäuse verteilt werden.

Bei der dargestellten Ausführungsform wird beispielsweise das Strahlerzeugungsmodulgehäuse 4 unter einem Tisch 11 angeordnet, auf dem das Funktionsmodulgehäuse 2 gemeinsam mit dem Monitor 61, der Tastatur 62 und der Maus 63 angeordnet sind. Das Funktionsmodulgehäuse 2 und das Strahlerzeugungsmodulgehäuse 4 sind zum einen über den Lichtleiter 7 miteinander verbunden, um die Laserstrahlung 20 dem Funktionsmodulgehäuse 2 zuzuführen und zum anderen über Steuer- und Signalleitungen 12 miteinander verbunden, da bei der dargestellten Ausführungsform in dem Strahlerzeugungsmodulgehäuse 4 auch die Steuereinrichtung 6 angeordnet ist. Eine Verbindung über Steuer- und Signalleitungen 12 zwischen dem Strahlerzeugungsmodulgehäuse 4 und dem Funktionsmodulgehäuse 2 wäre jedoch auch erforderlich, wenn die Steuereinrichtung 6 im Funktionsmodulgehäuse angeordnet wäre, um eine Steuerung der Laserstrahlerzeugungseinrichtung 5 zu bewirken.

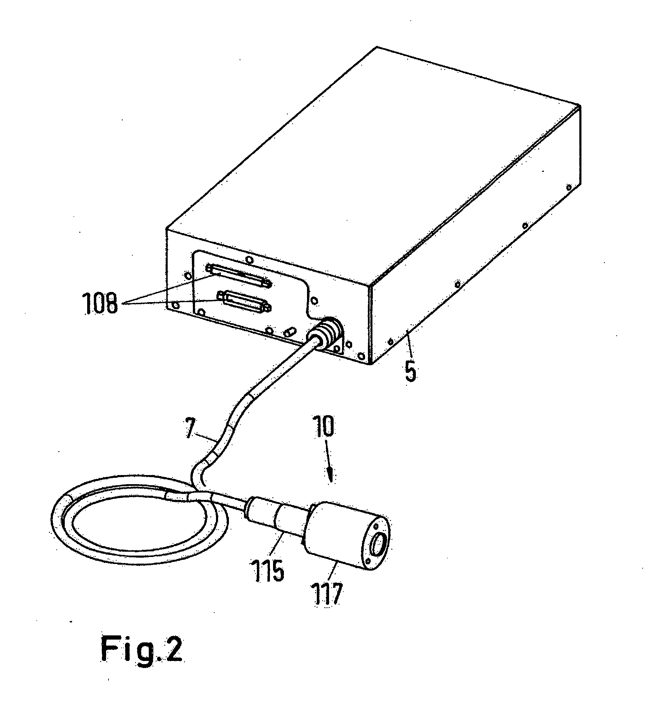

Bei der dargestellten Ausführungsform ist die Laserstrahlerzeugungseinrichtung 5 als Faserlaser ausgebildet und wird die Laserstrahlung 20 in der Lichtleitfaser 7 vorzugsweise als gepulste Laserstrahlung 20 bereitgestellt. An dem von der Laserstrahlerzeugungseinrichtung 5 abgewandten Ende der Lichtleitfaser 7 endet diese in einem so genannten Faserkopf 10. Eine Laserstrahlerzeugungseinrichtung 5, wie sie in das Strahlerzeugungsmodulgehäuse 4 integriert wird, mit einer Lichtleitfaser 7 und einem Faserkopf 10 sind exemplarisch in Fig. 2 dargestellt. Über Steckschnittstellen 108 kann die Laserstrahlerzeugungseinrichtung 5 mittels der Steuereinrichtung 6 gesteuert werden. Der Faserkopf 10 umfasst einen Hauptkörper 117 und einen Faserkopfhals 115.

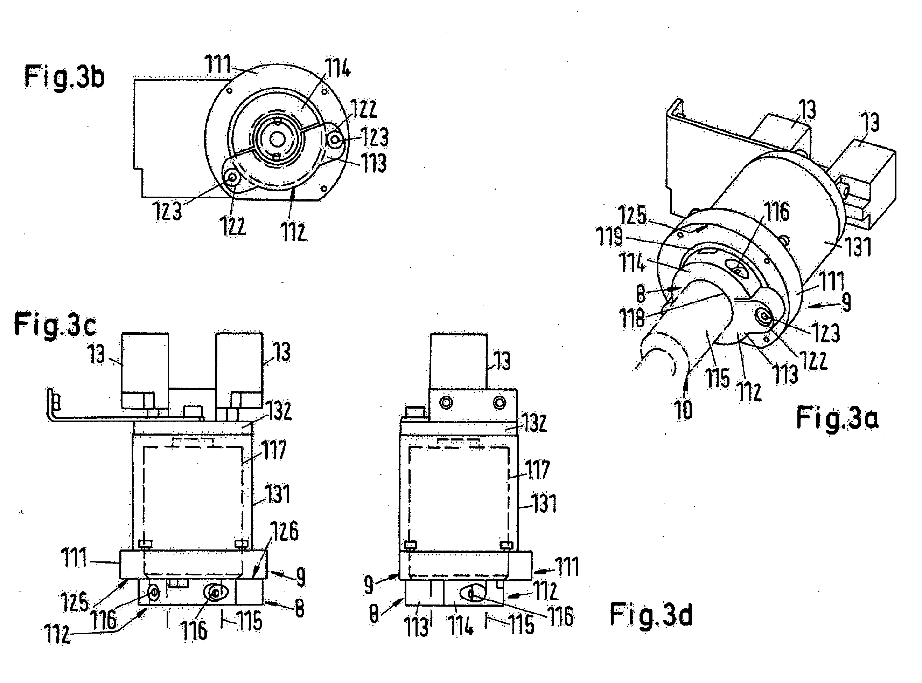

Während das Strahlerzeugungsmodulgehäuse 4 und das Funktionsmodulgehäuse 2 mittels der die Signal- und Steuerleitungen 12 signal- und steuerungstechnisch über genormte Steckverbindungen oder speziell ausgebildete Steckverbindungen durch Laien auf einfache Weise miteinander verbunden werden können, ist eine solche strahlungstechnische Verbindung über die Lichtleitfaser 7 nicht ohne Weiteres möglich. Zwar sind die im Stand der Technik bekannten Faserköpfe 10 so ausgebildet, dass diese im Prinzip in Halterungen geführt werden können, jedoch ergibt sich die Schwierigkeit, dass ein Austritt aus der Lichtleitfaser nicht immer zentrisch aus der Faser bzw. auf und entlang einer Mittelachse des Faserkopfes 10 erfolgt. Da die Faserköpfe 10 eine Zylindersymmetrie aufweisen, wäre es daher in der Regel nicht möglich, ohne die hier beschriebenen Vorkehrungen zu garantieren, dass nach einem Lösen und erneuten Verbinden eines Faserkopfes gemäß dem Stand der Technik die Laserstrahlung in der Weise erneut in die Strahlführungseinrichtung des Funktionsmodulgehäuses eingekoppelt wird oder würde, dass die Laserstrahlung ohne eine erneute Justage durch diese hindurch wie gewünscht auf das Dokument gerichtet werden kann. Daher sind spezielle Kopplungselement 8, 9 vorgesehen, die im Folgenden im Zusammenhang mit Fig. 3a bis 3d näher erläutert werden.

In Fig. 3a ist eine isometrische Ansicht der Kopplungselemente 8, 9 zum Ausbilden einer lösbaren Verbindung schematisch dargestellt. Das erste Kopplungselement 8 umfasst einen so genannten Zuführflansch 112, der auf einen Aufnahmeflansch 111 des zweiten Kopplungselements 9 geschraubt ist. Der Zuführflansch 112 ist zweiteilig aus einem ersten Klemmenelement 113 und einem zweiten Klemmenelement 114 gebildet, die einen Faserkopfhals 115 des Faserkopfes 10 beklemmen. Dies bedeutet, das erste Klemmenelement 113 und das zweite Klemmenelement 114 sind über erste Befestigungsmittel 116, beispielsweise Schrauben, aneinander befestigt, welche beispielsweise Schraubenköpfe aufweisen, welche mit handelsüblichen, gebräuchlichen Werkzeugen nicht gelöst werden können. Wie aus Fig. 2 zu erkennen ist, weist der Faserkopfhals 115 beispielsweise einen geringeren Durchmesser als ein Hauptkörper 117 des Faserkopfes 10 auf. Die aneinander befestigten Klemmenelemente 113 und 114 weisen somit eine Durchtrittsöffnung 118 auf, in der der Faserkopfhals geklemmt ist und durch die in dem Faserkopfhals geführte Laserstrahlung durch den Zuführflansch 112 hindurchtritt.

Der Aufnahmeflansch 111 weist eine weitere Durchtrittsöffnung 119 auf, durch die der Hauptkörper 117 des Faserkopfes 10 geführt wird. Bei der dargestellten Ausführungsform weisen der Aufnahmeflansch 111 und der Zuführflansch 112 Führungsmittel auf, welche es ermöglichen, dass der Zuführflansch 112 und der Aufnahmeflansch 111 beim Verbinden in einer vorbestimmten und reproduzierbaren Position und Orientierung relativ zueinander angeordnet werden. Bei der dargestellten Ausführungsform sind die Führungsmittel als Gewindelöcher in dem Aufnahmeflansch 111 (nicht dargestellt) und als Durchgangslöcher 122 in dem ersten Klemmenelement 113 des Zuführflansches 112 ausgebildet, so dass als Schrauben ausgebildete zweite Befestigungsmittel 123 dazu führen, dass eine Befestigungsfläche 125 des Aufnahmeflansches 111 gegen eine Aufnahmefläche 126 (vgl. Fig. 3c) geschraubt wird und eine Orientierung bezüglich einer Rotation um die zusammenfallenden Mittelachsen der Durchgangsöffnungen 118 und 119 fixiert wird. Hierzu sind die Gewindelöcher in dem Aufnahmeflansch und die Durchgangslöcher 122 in dem Zuführflansch 112 asymmetrisch hinsichtlich einer Rotationssymmetrie angeordnet und ausgebildet. Die Befestigungsfläche 125 und die Aufnahmefläche 126 stellen jeweils Verbindungs- oder Berührungsflächen des jeweiligen Kopplungselementes 8,9 dar.

Bei einige Ausführungsformen können diese Verbindungs- oder Berührungsflächen des Aufnahmeflansches und/oder des Zuführflansches Nuten oder Vorsprünge aufweisen, welche vorzugsweise entlang konzentrischer Kreissegmente oder umlaufend konzentrisch zu einem Mittelpunkt der jeweiligen Durchtrittsöffnungen ausgebildet sind und aneinander so angepasst sind, dass die Nuten und entsprechenden Vorsprünge ineinander greifen, um eine möglichst gute Zentrierung des Zuführflansches und des Aufnahmeflansches zu ermöglichen. Sind solche Nuten und Vorsprünge nicht asymmetrisch hinsichtlich einer Rotationssymmetrie ausgebildet, so sind zusätzlich solche hinsichtlich der Rotationssymmetrie asymmetrisch ausgebildeten Führungs- und/oder Befestigungsmittel, wie hier die Gewindelöcher und Durchgangslöcher notwendig, um die Rotationssymmetrie bei der Befestigung "aufzubrechen", um beim Lösen der Verbindung und erneutem Verbinden eine vorgegebene Orientierung des Faserkopfes relativ zu dem Aufnahmeflansch 111 und somit relativ zu der damit verbundenen Strahlführungseinrichtung sicherzustellen.

In Fig. 3b ist eine Ansicht der Kopplungselemente 8, 9 nach Fig. 3a entlang der Strahlführungseinrichtung der Lichtleitfaser 7 und somit eine Vorderansicht gezeigt. In Fig. 3c ist eine Draufsicht der in Fig. 3a dargestellten Gegenstände und in Fig. 3d eine Seitenansicht von rechts der in Fig. 3a dargestellten Gegenstände schematisch gezeigt. Gut zu erkennen ist in Fig. 3c und 3d, dass der Hauptkörper 117 des Faserkopfes 10 durch den Aufnahmeflansch 111 des ersten Kopplungselements 8 in einen zylinderartigen Becher 131 eingreift. Dieser kann mit dem Aufnahmeflansch 111 verschraubt oder mittels anderer Fügetechniken befestigt sein. Eine Abschlussfläche 132 des zylinderartigen Bechers 131 weist ebenfalls eine Durchgangsöffnung auf (nicht dargestellt), durch die hindurch die aus dem Faserkopf 10 austretende Laserstrahlung 20 hindurchtritt und auf die Justierspiegel 24 trifft (vgl. Fig. 1), über die eine Justage der Strahlführung der Strahlführungseinrichtung 21 möglich ist. Gut zu erkennen sind ebenfalls die Interlockschalter 13, die an der Abschlussfläche 132 befestigt sind. Von den Interlockschaltern 13 greifen durch die Abschlussfläche 132 Stifte 133 in den zylinderartigen Becher 131 ein, welche beim Einführen des Hauptkörpers 117 des Faserkopfes 10 der Lichtleitfaser 7 eingedrückt werden. Hierüber werden die Interlockschalter 13 betätigt und eine Laserstrahlerzeugung freigegeben.

Der besondere Vorteil der beschriebenen Kopplungselemente 8, 9 liegt darin, dass im Stand der Technik verfügbare Faserköpfe 10 genutzt werden können, um betriebsfertige Individualisierungsvorrichtungen für Dokumente, welche modular aufgebaut sind, herstellen zu können, welche kurzzeitig zerlegt und wieder zusammengesetzt werden können, indem die lösbare Verbindung geöffnet und wieder geschlossen wird, um anschließend den Betrieb fortsetzen zu können, ohne eine erneute Justage durch einen Optikfachmann vornehmen zu müssen. Dadurch dass der Laserkopf 10 in einer vorbestimmten Orientierung und Position beim erneuten Verbinden der Kopplungselemente 8, 9 relativ zu den Justierspiegeln 24 der Strahlführungseinrichtung 21 angeordnet wird, kann eine solche erneute Justage unterbleiben. Somit kann eine modular aufgebaute Individualisierungsvorrichtung für Dokumente durch geschultes Personal, welches nicht notwendigerweise aus Technikern bestehen muss, zerlegt und wieder zusammengesetzt werden.

Darüber hinaus bietet eine solche Individualisierungsvorrichtung 1 den Vorteil, dass diese zu einem Individualisierungssystem erweitert werden kann, welches mehrere Funktionsmodule umfasst, die für eine Individualisierung mittels Laserstrahlung für unterschiedliche Dokumentarten ausgebildet sind. Jedes Funktionsmodul ist hierbei für eine bestimmte Dokumentart vorgesehen. Beispielsweise kann ein Funktionsmodul für so genannte ID-1-Dokumente vorgesehen sein und ein anderes Funktionsmodul für ID-3-Dokumente. Hierdurch wird eine erhebliche Flexibilisierung geschaffen. In der Regel können kompaktere und kostengünstigere Individualisierungssysteme geschaffen werden, wenn Teile der Komponenten, welche die mechanische Handhabung betreffen, doppelt ausgebildet werden und anstelle von Komponenten genutzt werden, die an unterschiedliche Dokumentgrößen anpassbar sind oder verschiedene Dokumentgrößen wahlweise handhaben können.

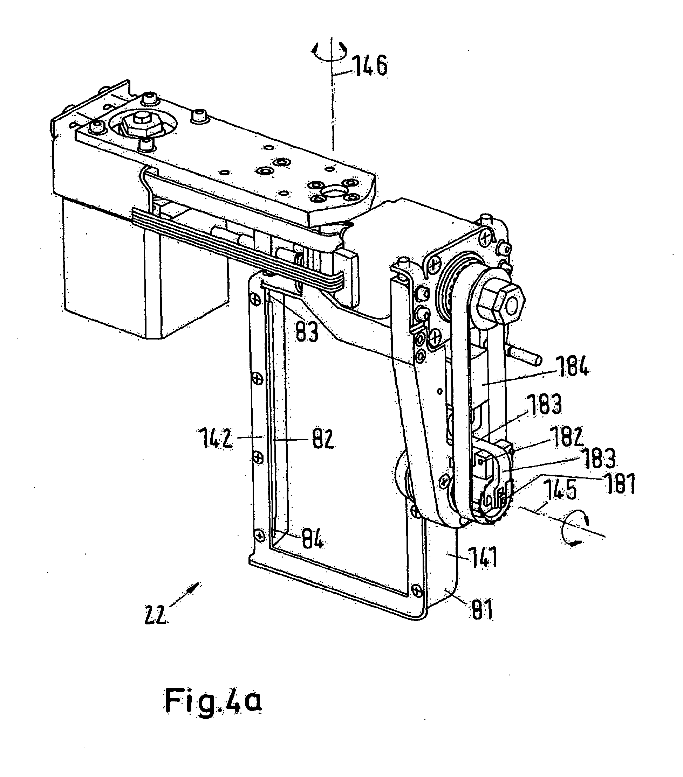

Anhand von Fig. 4a soll eine bevorzugte Drehtischanordnung beispielhaft erläutert werden. Der Drehtisch 23 nach Fig. 4a umfasst eine rahmenartige Halterung 81, welche zwei lange Schenkel 141, 142 umfasst. An Längsinnenseiten der Schenkel 141, 142 sind schienenartige oder nutartige Führungen 82 ausgebildet, die an einem Ende an einem Anschlag 83 enden und an einem gegenüberliegenden Ende 84 offen sind. In der dargestellten Stellung fällt ein in den schienenartigen Führungen 82 angeordnetes Dokument schwerkraftgetrieben aus der Halterung 81 heraus. Um dies zu verhindern, kann das Dokument mittels einer magnetisch angetriebenen Arretierung (welche unten näher erläutert wird) in der schienenartigen Führung arretiert werden, wenn es in der vorbestimmten Dokumentenstellung in der Halterung 81 angeordnet ist. Die Halterung 81 ist um eine erste Drehachse 145 um nahezu 360° schwenkbar. Wird die dargestellte Stellung mit der Winkelposition 180° assoziiert, so wird die Halterung 81 in eine 30°-Stellung verbracht, wenn ein Dokument zugeführt wird. Dieses wird in die schienenartigen Führungen 82 mittels der Rollentransporteinrichtung 73 (vgl. Fig. 1) eingeführt und fällt oder gleitet dann schwerkraftgetrieben entlang der schienenartigen Führungen 82 in die vorbestimmte Dokumentenstellung, in der sich das Dokument befindet, wenn es gegen die Anschläge 83 anliegt. In dieser Position wird das Dokument dann beispielsweise über einen Hubmagneten in dem Halter 81 arretiert. Durch eine Drehung um die Achse 145 kann das Dokument dann gegenüber der Laserstrahlung 20 ausgerichtet werden, um die Individualisierung des Dokuments vorzunehmen. Zusätzlich kann der Rahmen 81 um eine weitere Drehachse 146 in einem vorgegebenen Winkelbereich verschwenkt werden. Verschwenkungen entlang der zweiten Drehachse 146 und/oder der ersten Achse 145 werden vorzugsweise dazu genutzt, um CLI/MLI-Informationen in das Dokument 23 zu speichern, welches in der Halterung 81 angeordnet ist.

Der Vorteil des dargestellten Drehtisches 22 liegt darin, dass dieser kompakt ausgeführt werden kann und eine zuverlässige und einfach Positionierung des Dokuments 23 in die vorbestimmte Dokumentenstellung schwerkraftgetrieben vorgenommen werden kann. Auch die Ausgabe des Dokuments kann schwerkraftgetrieben bewirkt werden.

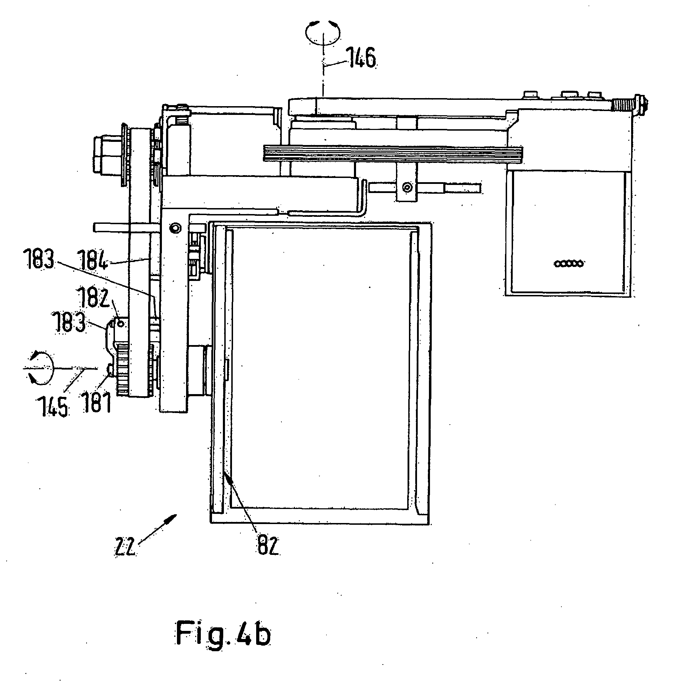

In Fig. 4b ist eine schematische Rückansicht des Drehtisches 22 nach Fig. 4a dargestellt. Gleiche technische Merkmale sind mit denselben Bezugszeichen gekennzeichnet. Nur die technisch wichtigen Merkmale sind hier detailliert beschrieben.

Die Achse 145 ist so ausgebildet, dass in ihrem Inneren ein Stößel 181 axial bewegbar angeordnet ist. Dieser ist federbelastet so vorgespannt, dass dieser in die schienen- oder nutartige Führung 82 hineingedrückt wird und so ein dort angeordnetes Dokument in der schienenartigen oder nutartigen Führung 82 arretiert. Über einen an einer Drehachse 182 drehbar gelagerten Doppelhebel 183 ist der Stößel 181 mit einem Hubmagneten 184 gekoppelt. In der stromlosen Stellung wird der Stößel 181 über die Federspannung in die schienenartige oder nutartige Führung 82 gedrückt. Wird der Hubmagnet bestromt, so wird der Doppelhebel 183 um die Schwenkachse 182 so geschwenkt, dass der Stößel 181 axial entlang der Drehachse 145 aus dem rahmenartigen Halter 81 gegen die Federkraft herausgezogen wird, so dass dieser nicht mehr in die schienenartige oder nutartige Führung 82 hineinragt. In dieser Stellung kann der Stößel 181 ein Dokument bei geeigneter Stellung des rahmenartigen Halters 81 in die schienenartige oder nutartige Führung 82 hineinfallen oder entsprechend bei geeigneter anderer Stellung des rahmenartigen Halters 82 aus dieser herausfallen bzw. herausgleiten.

In Fig. 5a ist ein Ausschnitt eines Absaugkanals 92 einer Absaugeinrichtung 91 (vergleiche Fig. 1) dargestellt, der eine Strömungsdetektoreinrichtung 93 umfasst. Im Absaugkanal 92 ist eine Klappe 160 angeordnet, die schwenkbar an einer Achse 161 gelagert ist, welche quer zu einer Strömungsrichtung 162 in dem Absaugkanal 92 orientiert ist. Die Klappe 160 ragt somit in den Strömungsweg des Absaugkanals 92 hinein. In der dargestellten Ausführungsform weist die Klappe 160 somit eine Fläche auf, die senkrecht zur Zeichnungsebene ausgedehnt ist. An der Klappe 160 ist eine Nase 163 ausgebildet oder befestigt, welche im Wesentlichen senkrecht zu dieser Fläche der Klappe 160 orientiert ist. Wird der Absaugkanal 92 beim Absaugen von Fluid durchströmt, so wird die Klappe aus der Ruhestellung (nicht ausgelenkten Stellung der Fig. 5a) in eine ausgelenkte Stellung, welche in Fig. 5b dargestellt ist, verbracht. Hierdurch gelangt die Nase 163 in einen Detektionsbereich eines Sensors 164, welcher beispielsweise als Induktionssensor ausgebildet ist. Hierdurch werden die Auslenkung der Klappe und indirekt hierüber eine Fluidströmung im Absaugkanal 92 festgestellt. Der Sensor kann somit ebenfalls wie die Interlockschalter 13 als Sicherungsvorrichtung für die Erzeugung der Laserstrahlung verwendet werden, um zu verhindern, dass eine Wechselwirkung zwischen der Laserstrahlung 20 und einem Dokument 23 stattfindet, solange keine Absaugung von Fluid aus dem Wechselwirkungsbereich stattfindet. Es versteht sich für den Fachmann, dass auch andere Sensoren, beispielsweise optische Sensoren, eingesetzt werden können, um die Auslenkung der Klappe 160 bzw. der Nase 163 zu detektieren.

In Fig. 6 ist schematisch eine Abschwächungseinheit 171 gezeigt, die in den Strahlengang der Laserstrahlung 20 bewegt ist bzw. durch die der Strahlengang der Laserstrahlung 20 geführt ist. Die Abschwächungseinheit 171 dient dem Zweck, eine Strahlungsleistung bzw. eine Pulsenergie so zu reduzieren, dass feinere Struktureinheiten bei der Wechselwirkung der Laserstrahlung mit dem Material des Dokuments erzeugt werden können. Hierdurch wird die Möglichkeit geschaffen, beispielsweise Mikroschrift in dem Dokument zu erzeugen.

Die Abschwächungseinheit 171 umfasst zwei für die Laserstrahlung möglichst transparente Körper 172, 173, welche jeweils zwei zueinander planparallele Oberflächen 174, 175 bzw. 176, 177 aufweisen. Die Festkörpereigenschaften und geometrischen Abmessungen der Körper 172, 173, welche beispielsweise Prismen darstellen, sind identisch gewählt. Die Oberflächen, insbesondere die Oberflächenbeschichtungen, können jedoch unterschiedlich gewählt sein. Zueinander sind die Körper 172, 173 so ausgerichtet, dass die planparallelen Oberflächen 174, 175 senkrecht zu den planparallelen Oberflächen 176, 177 orientiert sind. Insgesamt ist die Abschwächungseinheit 171 so in den Strahlengang der Laserstrahlung 20 schwenkbar oder fahrbar bzw. die Strahlführung durch die Abschwächungseinheit 171 so bewirkbar, dass die Laserstrahlung unter einem Winkel von möglichst 45° auf die planparallelen Oberflächen auftrifft. Die Abschwächungseinheit weist zwei Körper 172, 173 auf, so dass ein Strahlversatz, der beim Durchtritt durch den Körper 172 auftritt, beim Durchtritt durch den zweiten Körper 173 wieder kompensiert wird. Eintrittsflächen der Körper 172, 173 sind vorzugsweise teilverspiegelt, wodurch die Abschwächung der Laserstrahlung bewirkt wird. Dies bedeutet, dass an dem ersten Körper und/oder an dem zweiten Körper ein Teil der Laserstrahlung 20 aus dem Strahlengang ausgespiegelt wird und somit die aus der Abschwächungseinheit 171 austretende Laserstrahlung 20 hinsichtlich der Laserleistung bzw. Pulsenergie abgeschwächt ist. Die Abschwächungseinheit kann so ausgebildet sein, dass sie in den Strahlengang schwenkbar ist oder mittels eines Linearantriebs hinein- und herausgefahren werden kann. Ebenso ist es jedoch möglich, optische Elemente vorzusehen, die den Strahlengang wahlweise durch die Abschwächungseinheit führen oder an dieser vorbeiführen. Die ersten Lösungen werden jedoch bevorzugt, da diese robust und ohne großen Aufwand bewerkstelligt werden können.

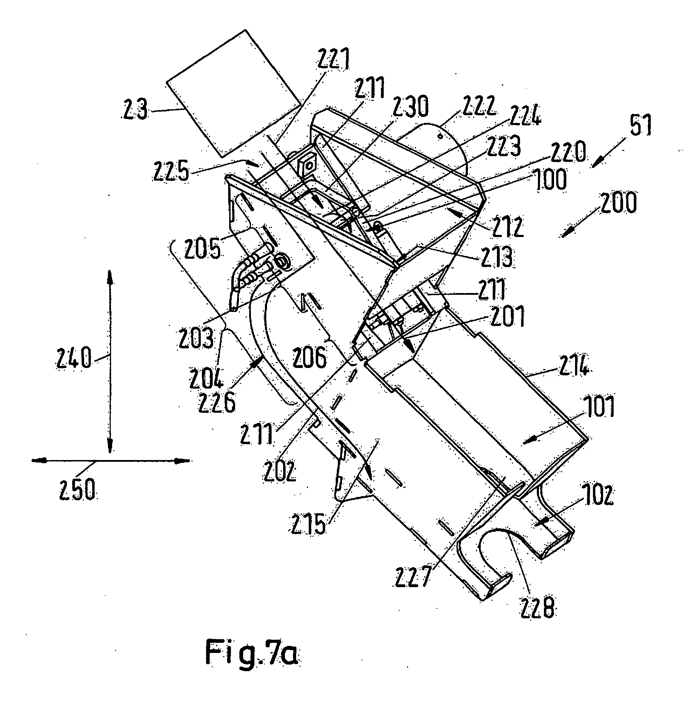

Im Folgenden soll die in der Laserindividualisierungsvorrichtung nach Fig. 1 als Ausgabeeinrichtung 51 grob beschriebene Dokumentenselektionseinrichtung 200 noch einmal detaillierter beschrieben werden. In Fig. 7a ist eine perspektivische Ansicht der Ausgabeeinrichtung 51 bzw. der Dokumentenselektionseinrichtung 200 dargestellt. Ein einzeln zugeführtes Dokument 23 wird entlang alternativer Dokumentführungspfade 201, 202 entweder zu einer als Gutfach bezeichneten Sammeleinrichtung, welche hier auch als Ausgabemagazin 101 bezeichnet ist, oder alternativ in einer als Schlechtfach bezeichnete Sammeleinrichtung geführt, welche hier als Ausschussmagazin 102 bezeichnet ist. Das Dokument bewegt sich entlang der Dokumentenführungspfade 201, 202 jeweils schwerkraftgetrieben.

Die Entscheidung, welchem der beiden Dokumentenführungspfade 201, 202 das Dokument folgt, wird über eine Weiche 100 bzw. einen Weichenabschnitt 203 einer geneigten Gleitstrecke 204 festgelegt. Die Weiche 100 bzw. der Weichenabschnitt 203 kann sich in einer geschlossenen Stellung befinden, welche in Fig. 7a dargestellt ist, oder in eine geöffnete Stellung bewegt werden. Befindet sich der Weichenabschnitt 203 in der geschlossenen Stellung, so gleitet das Dokument schwerkraftgetrieben entlang der gesamten geneigten Gleitstrecke 204 und folgt somit dem Dokumentführungspfad 201, der das Dokument in das Gutfach, d.h. das Ausgabemagazin 101, führt. Die Gleitstrecke 204 ist durch Dokumentenführungsabschnitte 205, 206 sowie den dazwischen befindlichen Weichenabschnitt 203 in der geschlossenen Stellung ausgebildet. Die Dokumentführungsabschnitte 205, 206 sind jeweils durch Schienenelemente 211 ausgebildet, die an Innenseiten 212, 213 von Seitenwänden 214, 215 angeordnet sind. Ein Teil der Gleitstrecke ist durch einen Rahmen 220 des Weichenabschnitts 203 gebildet. Der Rahmen 220 befindet sich in der geschlossenen Stellung teilweise zwischen den Schienenelementen des Dokumentführungsabschnitts 206, d.h. der Rahmen und die Schienenelemente überlappen sich teilweise entlang einer Gleitrichtung 221.

Über einen Magnetantrieb 222 kann der Weichenabschnitt aus der geschlossenen Stellung in die geöffnete Stellung bewegt werden. Hierdurch wird der Rahmen 220 um die Drehachse 223 verschwenkt, was mittels des Pfeils 224 angedeutet ist. Hierdurch entsteht in der ursprünglich ausgebildeten geneigten Gleitstrecke 204 ein Spalt, der sich quer zur Gleitrichtung 221 über die gesamte geneigte Gleitstrecke erstreckt (Diese Stellung ist hier nicht gezeigt).

Ein in die Dokumentenselektionseinrichtung 200 in eine Aufnahmeöffnung 225 eintretendes Dokument 23 kann somit schwerkraftgetrieben nicht entlang der im geschlossenen Zustand des Weichenabschnitts 203 ausgebildeten geneigten Gleitstrecke 204 gleiten, sondern wird schwerkraftgetrieben durch den ausgebildeten Spalt fallen und somit entlang des Dokumentenführungspfads 202 in das Schlechtfach geleitet, welches auch als Ausschussmagazin 102 bezeichnet ist. Nach unten ist der Dokumentführungspfad 202 durch eine gekrümmte Hinterwand 226 begrenzt. Böden 227, 228 sowohl des Gutfachs bzw. Ausgabemagazins 101 und des Schlechtfachs bzw. Ausschussmagazins 102 sind gegenüber den Führungselementen, den Schienenelementen 211 bzw. der gekrümmten Hinterwand 226, jeweils nach unten, d.h. in Schwerkraftfallrichtung, versetzt, so dass in die jeweiligen Magazine 101, 102 hineinfallende Dokumente aufeinander gestapelt werden können. So können die einzelnen Magazine 101, 102 jeweils mehrere Dokumente aufnehmen, bevor diese geleert werden müssen.

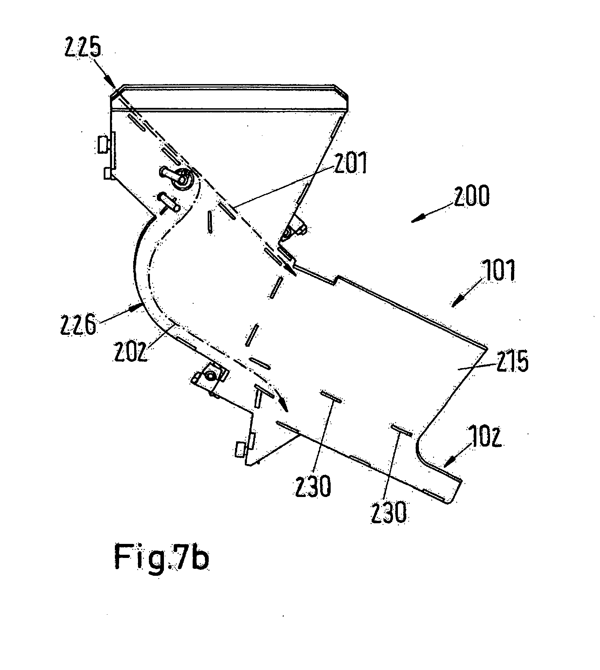

In Fig. 7b ist eine Seitenansicht der Seitenwand 215 dargestellt. Zu erkennen ist, dass die einzelnen zur Führung verwendeten Schienenelemente, die Rückwand oder die Böden jeweils über Schlitze 230 in die Seitenwand hineinragen und dort beispielsweise verschweißt sind. Gut zu erkennen ist, dass das Ausgabemagazin oberhalb des Ausschussmagazins angeordnet ist. Diese Anordnung könnte auch getauscht werden, jedoch ist eine Beschädigungsgefahr der Dokumente bei einem Gleiten entlang der geneigten Gleitstrecke geringer als bei einem Führen entlang des Dokumentführungspfads 202 in die untere Sammeleinrichtung, d.h. das Schlechtfach bzw. Ausschussmagazin 102 in der dargestellten Ausführungsform.

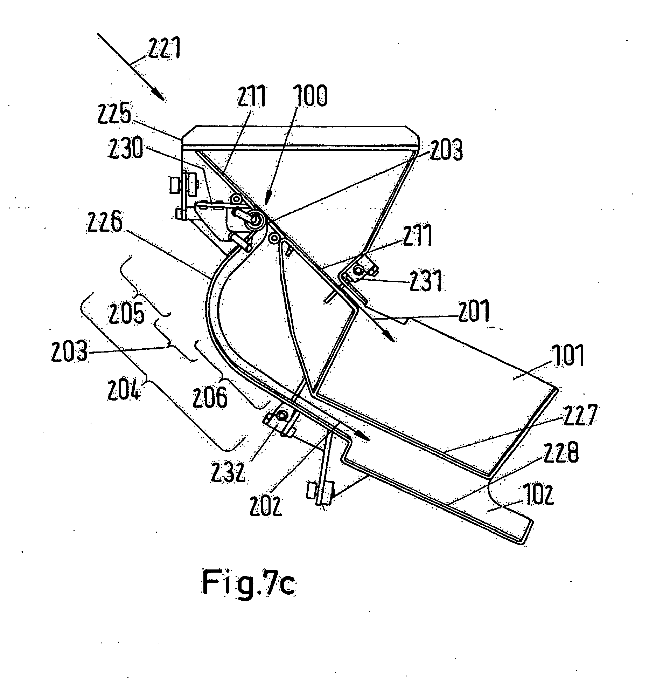

In Fig. 7c ist eine Schnittansicht der Dokumentenselektionseinrichtung 200 dargestellt, die sich ergibt, wenn die Seitenwand 215 der Fig. 7b entfernt ist. Bei dieser Ausführungsform ist zu erkennen, dass die Weiche 100 einen zusätzlichen Rahmen 230 umfasst, der auch gut in Fig. 7a zu erkennen ist. Dieser verleiht der Weiche Stabilität und gleicht das Gewicht des Rahmens 220 aus, so dass die auf den Magnetantrieb 222 wirkenden Momente nahezu oder vollständig ausgeglichen sind, wenn sich der Weichenabschnitt in der geschlossenen Stellung befindet. In Fig. 7c sind darüber hinaus zwei Sensoren 231, 232 schematisch dargestellt, welche die in die Magazine 101, 102 gleitenden oder rutschenden Dokumente erfassen.

Bei der beschriebenen Ausführungsform ist die Dokumentenselektionseinrichtung 200 so anzuordnen, dass die geneigte Gleitstrecke 204 sowohl gegenüber einer Vertikalen 240 als auch einer Horizontalen 250 geneigt ist, so dass ein eingeführtes Dokument 23 schwerkraftgetrieben entlang der Gleitstrecke gleitet, sofern sich der Weichenabschnitt 203 in der geschlossenen Stellung befindet.

Die verschiedenen erfinderischen Aspekte der beschriebenen Individualisierungsvorrichtung bzw. des beschriebenen Individualisierungssystems können einzeln oder in beliebiger Kombination zur Verwirklichung der Erfindung genutzt werden.

Es versteht sich, dass nur beispielhafte Ausführungsformen beschrieben sind.

Einzelne der beschriebenen Komponenten können auch unabhängig von der hier beschriebenen modularen Laserindividualisierungsvorrichtung verwendet werden.

### Bezugszeichenliste

- 1: Laserindividualisierungsvorrichtung
- 2: Funktionsmodulgehäuse
- 3: Funktionsmodul
- 4: Strahlerzeugungsmodulgehäuse
- 5: Laserstrahlungserzeugungseinrichtung
- 6: Steuereinrichtung
- 7: Lichtleitfaser
- 8: erstes Kopplungselement
- 9: zweites Kopplungselement
- 10: Faserkopf
- 11: Tisch
- 12: Steuer- und Signalleitungen
- 13: Interlockschalter
- 20: Laserstrahlung
- 21: Strahlführungseinrichtung
- 22: Drehtisch
- 23: Dokument
- 24: Justierspiegel
- 25: Ablenkeinrichtung
- 26: drehbar gelagerter Spiegel
- 27: Aktor
- 30 - 33: Schnittstellen
- 41: Vereinzelungs- und Zuführeinrichtung
- 51: Ausgabeeinrichtung
- 61: Monitor
- 62: Tastatur
- 63: Maus
- 71: Eingabemagazin
- 72: Walzen
- 73: Rollentransporteinrichtung
- 81: rahmenartiger Halter
- 82: schienenartige oder nutartige Führungen
- 83: Anschlag
- 84: offenes Ende
- 91: Absaugeinrichtung
- 92: Absaugkanal
- 93: Strömungsdetektionseinrichtung
- 100: Weiche
- 101: Ausgabemagazin
- 102: Ausschussmagazin
- 108: Steckschnittstelle
- 111: Aufnahmeflansch
- 112: Zuführflansch
- 113: erstes Klemmenelement
- 114: zweites Klemmenelement
- 115: Faserkopfhals
- 116: erste Befestigungsmittel
- 117: Hauptkörper (des Faserkopfes 10)
- 118: Durchtrittsöffnung (Zuführflansch)
- 119: weitere Durchtrittsöffnung (Aufnahmeflansch)
- 122: Durchgangslöcher
- 123: zweite Befestigungsmittel
- 131: zylinderartiger Becher
- 132: Abschlussfläche
- 133: Stifte
- 141, 142: Schenkel
- 145: erste Drehachse
- 146: zweite Drehachse
- 160: Klappe
- 161: Achse
- 162: Strömungsrichtung
- 163: Nase
- 164: Sensor
- 171: Abschwächungseinheit
- 172: erster Körper
- 173: zweiter Körper
- 174, 175: planparallele Oberflächen
- 176, 177: planparallele Oberflächen
- 181: Stößel
- 182: Drehachse
- 183: Doppelhebel
- 184: Hubmagnet
- 200: Dokumentenselektionseinrichtung
- 201: Dokumentenführungspfad
- 202: Dokumentenführungspfad
- 203: Weichenabschnitt
- 204: geneigte Gleitstrecke
- 205: Dokumentenführungsabschnitt
- 206: Dokumentenführungsabschnitt
- 211: Schienenelemente
- 212: Seitenfläche
- 213: Seitenfläche
- 214: Seitenwand
- 215: Seitenwand
- 220: Rahmen
- 221: Gleitrichtung
- 222: Magnetantrieb
- 223: Drehachse
- 224: Pfeil
- 225: Aufnahmeöffnung
- 226: gekrümmte Hinterwand
- 230: weiterer Rahmen
- 231: Sensor
- 232: Sensor
- 240: Vertikale
- 250: Horizontale

## Patentansprüche

1. Abschwächungsvorrichtung für eine Laserindividualisierungsvorrichtung (1), welche wahlweise in einen nicht-abschwächenden Zustand und mindestens einen abschwächenden Zustand versetzbar ist, wobei auf die Abschwächungsvorrichtung geführte Laserstrahlung im nichtabschwächenden Zustand ungeschwächt und in dem mindestens einen abschwächenden Zustand abgeschwächt aus der Abschwächungsvorrichtung austritt, wobei die Abschwächungsvorrichtung eine Abschwächungseinheit (171) und Strahlführungsmittel umfasst, wobei die Abschwächungseinheit (171) zwei hinsichtlich ihrer Festkörpereigenschaften identisch beschaffene, planparallele Oberflächen (174, 175; 176, 177) aufweisende und zueinander unter 90° bezüglich der Oberflächen orientierte Körper (172, 173) umfasst,
und wobei zumindest eine der Oberflächen (174 - 177) teilverspiegelt ausgebildet ist,
und die Strahlführungsmittel ausgebildet sind, in dem abschwächenden Zustand eine Strahlführung in der Wiese zu bewirken, dass die Laserstrahlung durch die Abschwächungseinheit (171) tritt, wobei die planparallelen Oberflächen (174 - 177) eine Orientierung von nahezu 45° oder 45° gegenüber der Laserstrahlung (20) aufweisen, oder in dem nichtabschwächenden Zustand einer Strahlführung des Strahlengangs an der Abschwächungseinheit (171) vorbei herbeizuführen.

2. Abschwächungsvorrichtung nach Anspruch 1, **dadurch gekennzeichnet, dass** die Körper (172, 173) für die Laserstrahlung transparent sind.

3. Abschwächungsvorrichtung nach Anspruch 1 oder 2, **dadurch gekennzeichnet, dass** die Strahlführungsmittel einen Stellantrieb umfassen, mittels dessen die Abschwächungseinheit (171) alternativ in den Strahlengang hinein oder heraus schwenkbar oder mittels dessen die Abschwächungseinheit (171) alternativ in den Strahlengang hinein oder herausfahrbar ist.

4. Abschwächungsvorrichtung nach Anspruch 3, **dadurch gekennzeichnet, dass** der Stellantrieb ein Linearantrieb ist.

5. Abschwächungsvorrichtung nach einem der Ansprüche 1 bis 4, **dadurch gekennzeichnet, dass** eine Reflektivität der zumindest einen Oberfläche ortsabhängig variiert, und die Strahlführungsmittel so steuerbar sind, dass eine Durchtrittsposition der Laserstrahlung durch die zumindest eine Oberfläche gesteuert wählbar und hierüber ein Grad der Abschwächung einstellbar ist.

6. Abschwächungsvorrichtung nach einem der Ansprüche 1 bis 5, **dadurch gekennzeichnet, dass** zusätzlich zu der zumindest einen teilverspiegelten Oberfläche (174) eine weitere der planparallelen Oberflächen (176) teilverspiegelt ist, wobei sich deren Teilverspiegelung nicht über die gesamte flächige Ausdehnung der weiteren Oberfläche (176) erstreckt, und die Strahlführungsmittel so steuerbar sind, dass eine Durchtrittsposition der Laserstrahlung durch die zumindest eine weitere Oberfläche (176) gesteuert wählbar und hierüber ein grad der Abschwächung einstellbar ist.

7. Laserindividualisierungsvorrichtung (1) für Dokumente (3) umfassend:
eine Steuereinrichtung (6);
eine Laserstrahlerzeugungseinrichtung (5) zum Erzeugen von Laserstrahlung (20) sowie
eine steuerbare Strahlführungseinrichtung (21) zum durch die Steuereinrichtung (6) gesteuerten Richten der Laserstrahlung (20) auf mindestens ein Dokument (23), um über eine Laserwechselwirkung Individualisierungsinformationen in dem mindestens einen Dokument (23) zu speichern,
wobei
die Laserindividualisierungsvorrichtung (1) modular ausgebildet ist, indem die Laserstrahlerzeugungseinrichtung (5) in einem Strahlerzeugungsmodulgehäuse (4) und die steuerbare Strahlführungseinrichtung (21) in einem getrennt von dem Strahlerzeugungsmodulgehäuse (4) ausgebildeten Funktionsmodulgehäuse (2) angeordnet sind, wobei das Funktionsmodulgehäuse (2) und das Strahlerzeugungsmodulgehäuse (4) strahlungstechnisch über ein erstes Kopplungselement (8) und ein zweites Kopplungselement (9)lösbar miteinander verbunden sind oder verbindbar sind, wobei das erste und das zweite Kopplungselement (8, 9) aufeinander abgestimmte Führungsmittel aufweisen, mittels derer sich in dem verbundenen Zustand eine reproduzierbare relative Positionierung ergibt, wobei das Funktionsmodulgehäuse oder das Strahlerzeugungsmodulgehäuse (4) eine Abschwächungsvorrichtung nach einem der Ansprüche 1 bis 6 umfasst.

8. Laserindividualisierungsvorrichtung (1) nach Anspruch 7, **dadurch gekennzeichnet, dass** das erste Kopplungselement (8) und das zweite Kopplungselement (9) jeweils eine Durchtrittsöffnung (18, 19) aufweisen, durch die hindurch die Laserstrahlung (20) im verbundenen Zustand der Kopplungselemente (8, 9) führbar ist.

9. Laserindividualisierungsvorrichtung (1) nach Anspruch 8, **dadurch gekennzeichnet, dass** die Durchtrittsöffnungen (18, 19) jeweils im Wesentlichen kreisförmig ausgebildet sind und die Führungsmittel des ersten Kopplungselement (8) und des zweiten Kopplungselements (9) jeweils Zentrierelemente umfassen, über die die Durchtrittsöffnungen (18, 19) der Kopplungselemente (8, 9) im verbundenen Zustand zueinander zentriert sind oder beim Verbinden zentrierbar sind.

10. Laserindividualisierungsvorrichtung (1) nach einem der Ansprüche 7 bis 9, **dadurch gekennzeichnet, dass** das Strahlerzeugungsmodulgehäuse (4) und das Funktionsmodulgehäuse (2) mittels eines Lichtleiters (7) miteinander verbunden sind.

11. Laserindividualisierungsvorrichtung (1) nach Anspruch 10, **dadurch gekennzeichnet, dass** der Lichtleiter (7) in dem ersten Kopplungselement (8) arretiert ist oder arretierbar ist, so dass der Lichtleiter (7) oder ein Lichtpfad der aus dem Lichtleiter austretenden Laserstrahlung (20) im Wesentlichen zentrisch durch die Durchtrittsöffnung (118) geführt ist oder führbar ist.

12. Laserindividualisierungsvorrichtung (1) nach einem der Ansprüche 10 oder 11, **dadurch gekennzeichnet, dass** das erste Kopplungselement (8) als ein Zuführflansch (112) ausgebildet ist, in dem der Lichtleiter (7) arretierbar ist oder arretiert ist und das zweite Kopplungselement (9) ein Aufnahmeflansch (111) ist, der in dem Funktionsmodulgehäuse (2) angeordnet ist oder in dem Strahlerzeugungsmodulgehäuse (4) angeordnet ist und der Zuführflansch (112) und der Aufnahmeflansch (111) asymmetrisch ausgebildete Befestigungs- und/oder Führungsmittel umfassen, so das der Aufnahmeflansch (111) und der Zuführflansch (112) nur in einer Orientierung miteinander lösbar verbindbar sind.

13. Laserindividualisierungsvorrichtung (1) nach einem der Ansprüche 7 bis 12, **dadurch gekennzeichnet, dass** in dem Funktionsmodulgehäuse (2) ein Drehtisch (22) angeordnet ist, der eine Dokumentaufnahme umfasst, welche beweglich so angeordnet ist, dass diese in eine Aufnahmestellung bewegbar ist, in der sich ein zugeführtes Dokument (23) im Wesentlichen schwerkraftgetrieben in eine vordefinierte Dokumentenstellung in der Dokumentenaufnahme bewegt.

14. Laserindividualisierungsvorrichtung (1) nach einem der Ansprüche 7 bis 13, **dadurch gekennzeichnet, dass** in oder an dem Funktionsmodulgehäuse (2) eine Absaugeinrichtung (91) ausgebildet ist, die einen Absaugkanal (92) umfasst, in dem eine schwenkbar um eine quer zur Durchströmungsrichtung (162) des Absaugkanals (92) ausgerichtete Achse (161) gelagerte, in einem Ruhezustand, in dem keine Fluidströmung in dem Absaugkanal (92) vorherrscht, in den Strömungsweg des Absaugkanals (92) hineinragende Klappe (160) angeordnet ist, und ein Sensor (164) im oder an dem Schwenkbereich der Klappe (161) angeordnet ist, mittels dessen eine Auslenkung der Klappe (161) bei einer Fluidströmung während einer Absaugung von Fluid erfassbar ist.

15. Laserindividualisierungseinrichtung (1) nach einem der Ansprüche 7 bis 14, **dadurch gekennzeichnet, dass** das Funktionsmodulgehäuse eine Dokumentenselektionseinrichtung umfasst, wobei die Dokumentenselektionseinrichtung mindestens zwei Sammeleinrichtungen (101,102) zum Aufnehmen von Dokumenten,
eine Aufnahmeöffnung zum Zuführen von vereinzelten Dokumenten und Dokumentführungsmittel zum wahlweisen Leiten des zugeführten Dokuments zu einem der mindestens zwei Sammeleinrichtungen (101,102) umfasst,
wobei die Dokumentführungsmittel zwei Dokumentführungspfade (201, 202) zwischen der Aufnahmeöffnung und den mindestens zwei Sammeleinrichtungen bilden und wobei die Dokumentführungsmittel einen beweglichen Weichenabschnitt und einen Dokumentführungsabschnitt umfassen, wobei der Weichenabschnitt (203) in einer geschlossenen Stellung mit dem Dokumentführungsabschnitt eine gegenüber einer Vertikalen und einer Horizontalen geneigte Gleitstrecke (204) eines der mindestens zwei Dokumentenführungspfade bildet, so dass ein zugeführtes Dokument schwerkraftgetrieben die gesamte Gleitstrecke (204) entlang gleitet oder rutscht, und anschließend zu der einen der mindestens zwei Sammeleinrichtungen geleitet wird, und wobei in einer geöffneten Stellung ein Spalt in dieser Gleitstrecke (204) entsteht, der sich quer zu einer Gleitrichtung erstreckt, so dass ein in die Gleitstrecke (204) eintretendes Dokument (23) beim schwerkraftgetriebenen Gleiten durch den ausgebildeten Spalt hindurch tritt und die Gleitstrecke (204) hierhindurch verlässt, und so entlang eines anderen der mindestens zwei Dokumentführungspfade (201, 202) schwerkraftgetrieben zu einer anderen der mindestens zwei Sammeleinrichtungen geleitet wird, um die mindestens zwei Sammeleinrichtungen als Gutfach zum Aufnehmen erfolgreich personalisierter Dokumente und Schlechtfach für Ausschussdokumente zu verwenden.

## Claims

1. Attenuating device for a laser individualisation device (1), which can be optionally set into a non-attenuating state and into at least one attenuating state, wherein laser radiation directed onto the attenuating device is not attenuated in the non-attenuating state, and in the at least one attenuating state is emitted attenuate from the attenuating device, wherein the attenuating device comprises an attenuating unit (171) and radiation guidance means, wherein the attenuating unit (171) comprises two bodies (172, 173) the bodies having, which are of identical arrangement in respect of their solid-body properties and comprise plane-parallel surfaces (174, 175; 176, 177) and are oriented by 90° to one another in respect of the surfaces and wherein at least one of the surfaces (174 -177) is formed as semi-transparent mirror, and the radiation guidance means are formed such that, in the attenuating state, they exert a radiation guidance effect in such a way that the laser radiation passes through the attenuating unit (171), wherein the plane-parallel surfaces (174 - 177) exhibit an orientation of close to 45° or 45° in respect of the laser radiation (20), or in the non-attenuating state induce radiation guidance of the radiation path past the attenuating unit (171).

2. Attenuating device according to claim 1, **characterised in that** the bodies (172,173) are transparent for the laser radiation.

3. Attenuating device according to claim 1 or 2, **characterised in that** the radiation guidance means comprise an actuator, by means of which the attenuating unit (171) can alternatively be pivoted into the radiation path or out of it, or by means of which the attenuating unit (171) can alternatively be moved into the radiation path or out of it.

4. Attenuating device according to claim 3, **characterised in that** the actuator is a linear drive.

5. Attenuating device according to any one of claims 1 to 4, **characterised in that** a reflectivity of the at least one surface varies depending on its location, and the radiation guidance means are controllable in such a way that a passage position of the laser radiation through the at least one surface can be selected in a controllable manner, and thereby a degree of the attenuation can be adjusted.

6. Attenuating device according to any one of claims 1 to 5, **characterised in that**, in addition to the at least one semi-transparently mirroring surface (174), another one of the plane-parallel surfaces (176) is semi-transparently mirrored, wherein its semi-transparent mirroring does not extend over the entire flat extent of the another surface (176), and the radiation guidance means are controllable in such a way that a passage position of the laser radiation through the at least another surface (176) can be selected in a controllable manner, and thereby a degree of the attenuation can be adjusted.

7. Laser individualisation device (1) for documents (3), comprising: A control device (6); a laser beam generating device (5) for the generation of laser radiation (20), and a controllable radiation guidance device (21) for the directing of the laser radiation (20) onto at least one document (23) in a controlled manner by the control device (6), in order to store, by means of a laser reciprocal effect, individualisation information in the at least one document (23), wherein the laser individualisation device (1) is of modular design, in that the laser beam generating device (5) is arranged in a radiation generating module housing (4), and the controllable radiation guidance device (21) is arranged in a function module housing (2) formed separately from the radiation generating module housing (4), wherein the function module housing (2) and the radiation generating module housing (4), in respect of radiation technology, are connected or can be connected to one another in a detachable manner by means of a first coupling element (8) and a second coupling element (9), wherein the first and the second coupling elements (8, 9) comprise guidance means matched to one another, by means of which, in the connected state, a reproducible relative positioning is attained, wherein the function module housing or the radiation generating module housing (4) comprises an attenuating device according to any one of claims 1 to 6.

8. Laser individualisation device (1) according to claim 7,**characterised in that** the first coupling element (8) and the second coupling element (9) in each case exhibit a passage aperture (18, 19), through which the laser radiation (20) can be guided in the connected state of the coupling elements (8, 9).

9. Laser individualisation device (1) according to claim 8, **characterised in that** the passage apertures (18, 19) are in each case formed essentially circular, and the guidance means of the first coupling element (8) and of the second coupling element (9) in each case comprise centring elements, by means of which the passage apertures (18,19) of the coupling elements (8, 9) in the connected state are centred in relation to one another or can be centred when connection takes place.

10. Laser individualisation device (1) according to any one of claims 7 to 9, **characterised in that** the radiation generating module housing (4) and the function module housing (2) are connected to each other by means of a fibre-optic conductor (7).

11. Laser individualisation device (1) according to claim 10, **characterised in that** the fibre-optic conductor (7) is locked or can be locked in the first coupling element (8), such that the fibre-optic conductor (7) or a light path of the laser radiation (20) emerging from the fibre-optic conductor is guided or can be guided essentially centrically through the passage aperture (118).

12. Laser individualisation device (1) according to any one of claims 10 or 11, **characterised in that** the first coupling element (8) is formed as a delivery flange (112), in which the fibre-optic conductor (7) can be locked or is locked, and the second coupling element (9) is formed as an acceptance flange (111), which is arranged in the function module housing (2) or in the radiation generating module housing (4), and the delivery flange (112) and the acceptance flange (111) comprise asymmetrically formed securing and/or guide means, such that the acceptance flange (111) and the delivery flange (112) can be connected to each other in a detachable manner in one orientation only.

13. Laser individualisation device (1) according to any one of claims 7 to 12, **characterised in that** a turntable (22) is arranged in the function module housing (2), which comprises a document acceptance unit, which is movable arranged in such a way that it can be moved into an acceptance position, in which a document (23) which is introduced moves essentially under the force of gravity into a predefined document position in the document acceptance unit.

14. Laser individualisation device (1) according to any one of claims 7 to 13, **characterised in that** a suction device (91) is formed in or at the function module housing (2), which comprises a suction channel (92), in which a flap (160) is arranged, mounted on bearings in such as to be able to pivot about an axis (161) aligned transversely to the passage flow direction (162) of the suction channel (92), in a position of rest in which no fluid flow prevails in the suction channel (92), projecting into the flow path of the suction channel (92), and that a sensor (164) is arranged in or at the pivot range of the flap (161), by means of which a deflection of the flap (161) can be detected in the event of a fluid flow during a suction of fluid.

15. Laser individualisation device (1) according to any one of claims 7 to 14, **characterised in that** the function module housing comprises a document selection device, wherein the document selection device comprises at least two collecting devices (101,102) for accepting documents, an acceptance aperture for delivery of individualised documents, and document guide means for the optional conducting of the delivered document to one of the at least two collecting devices (101,102), wherein the document guide means form two document guide paths (201, 202) between the acceptance aperture and the at least two collecting devices, and wherein the document guide means comprise a movable switch points section and a document guide section, wherein the switch points section (203) in a closed setting forms with the document guide section a slide stretch (204), inclined in relation to the vertical and to the horizontal, of one of the at least two document guide paths, such that a document which is being guided slides or slips under the force of gravity along the entire slide stretch (204) and is then conducted to one of the at least two collecting devices, and wherein, in an open position, a gap occurs in this slide stretch (204), which extends transversely to a slide direction, such that a document (23) entering the slide stretch (204), when sliding under the force of gravity, passes through the gap which is formed and leaves the slide stretch (204) through it, and is thus conducted along another of the at least two document guide paths (201, 202) under the force of gravity to another of the at least two collecting devices, in order for the at least two collecting devices to be used as a Good compartment to accept successfully personalised documents, and a Bad compartment for reject documents.

## Revendications

1. Dispositif d'affaiblissement pour un dispositif d'individualisation laser (1), qui peut être amené au choix dans un état de non-affaiblissement et au moins dans un état d'affaiblissement, sachant que le rayonnement laser guidé sur le dispositif d'affaiblissement sort du dispositif d'affaiblissement sans être affaibli dans l'état de non-affaiblissement et en étant affaibli dans l'état d'affaiblissement au moins au nombre de un, sachant que le dispositif d'affaiblissement comprend une unité d'affaiblissement (171) et des moyens de guidage de rayonnement, sachant que l'unité d'affaiblissement (171) comprend deux corps (172,173) présentant les mêmes caractéristiques en matière de propriétés de corps solide, présentant des surfaces (174, 175 ; 176,177) planes et parallèles et orientés l'un par rapport l'autre de manière à former un angle de 90° par rapport aux surfaces,
et sachant qu'au moins une des surfaces (174 - 177) est réalisée de manière à être recouverte d'une couche partiellement réfléchissante,
et sachant que les moyens de guidage de rayonnement sont réalisés pour entraîner dans l'état d'affaiblissement un guidage de rayonnement tel que le rayonnement laser traverse l'unité d'affaiblissement (171), sachant que les surfaces (174 - 177) planes et parallèles présentent une orientation approximative de 45° ou de 45° par rapport au rayonnement laser (20), ou que les moyens de guidage de rayonnement sont réalisés pour, dans l'état de non-affaiblissement, guider un rayonnement laser de la trajectoire des rayons le long de l'unité d'affaiblissement (171).

2. Dispositif d'affaiblissement selon la revendication 1, **caractérisé en ce que** les corps (172, 173) sont transparents pour le rayonnement laser.

3. Dispositif d'affaiblissement selon la revendication 1 ou 2, **caractérisé en ce que** les moyens de guidage de rayonnement comprennent un système d'entraînement de réglage, au moyen duquel l'unité d'affaiblissement (171) peut être en variante pivotée de manière à entrer dans la trajectoire des rayons ou en sortir ou au moyen duquel l'unité d'affaiblissement (171) peut en variante être déployée de manière à entrer dans la trajectoire des rayons ou de manière à en sortir.

4. Dispositif d'affaiblissement selon la revendication 3, **caractérisé en ce que** le système d'entraînement de réglage est un système d'entraînement linéaire.

5. Dispositif d'affaiblissement selon l'une quelconque des revendications 1 à 4, **caractérisé en ce qu'**une réflectivité de la surface au moins au nombre de une varie en fonction de l'emplacement, et **en ce que** les moyens de guidage de rayonnement peuvent être commandés de telle manière qu'il est possible de choisir de manière commandée la position de passage du rayonnement laser à travers la surface au moins au nombre de une et qu'il est possible de régler, pour ce faire, un degré de l'affaiblissement.

6. Dispositif d'affaiblissement selon l'une quelconque des revendications 1 à 5, **caractérisé en ce qu'**une autre surface des surfaces planes et parallèles (176) est recouverte d'une couche partiellement réfléchissante en complément de la surface (174) recouverte d'une couche partiellement réfléchissante au moins au nombre d'une, sachant que leur recouvrement d'une couche partiellement réfléchissante ne s'étend pas sur la totalité de l'autre surface (176), et **en ce que** les moyens de guidage de rayonnement peuvent être commandés de telle manière qu'il est possible de choisir une position de passage du rayonnement laser à travers l'autre surface (176) au moins au nombre d'une et qu'il est possible de régler, pour ce faire, un degré de l'affaiblissement.

7. Dispositif d'individualisation laser (1) pour des documents (3) comprenant :
un système de commande (6) ;
un système de production de rayonnement laser (5) servant à produire un rayonnement laser (20) ;
ainsi
qu'un système de guidage de rayonnement (21) pouvant être commandé servant à orienter de manière commandée par le système de commande (6) le rayonnement laser (20) sur au moins un document (23) afin de mémoriser par l'intermédiaire d'une interaction laser des informations d'individualisation dans le document (23) au moins au nombre de un,
sachant
que le dispositif d'individualisation laser (1) est réalisé de manière modulaire, en ce que le système de production de rayonnement laser (5) est disposé dans un boîtier de module de production de rayonnement (4) et que le système de guidage de rayonnement (21) pouvant être commandé est disposé dans un boîtier de module fonctionnel (2) réalisé séparément du boîtier de module de production de rayonnement (4), sachant que le boîtier de module fonctionnel (2) et le boîtier de module de production de rayonnement (4) sont reliés ou peuvent être reliés l'un à l'autre de manière amovible, selon la technique de rayonnement, par l'intermédiaire d'un premier élément de couplage (8) et d'un deuxième élément de couplage (9), sachant que le premier élément de couplage et le deuxième élément de couplage (8, 9) présentent des moyens de guidage adaptés les uns aux autres, lesquels donnent lieu, dans l'état assemblé, à un positionnement relatif reproductible, sachant que le boîtier de module fonctionnel ou le boîtier de module de production de rayonnement (4) comprend un dispositif d'affaiblissement selon l'une quelconque des revendications 1 à 6.

8. Dispositif d'individualisation laser (1) selon la revendication 7, **caractérisé en ce que** le premier élément de couplage (8) et le deuxième élément de couplage (9) présentent respectivement une ouverture de passage (18,19), à travers laquelle le rayonnement laser (20) peut être guidé lorsque les éléments de couplage (8, 9) sont assemblés.

9. Dispositif d'individualisation laser (1) selon la revendication 8, **caractérisé en ce que** les ouvertures de passage (18, 19) sont réalisées de manière à présenter respectivement une forme circulaire, et **en ce que** les moyens de guidage du premier élément de couplage (8) et du deuxième élément de couplage (9) comprennent respectivement des éléments de centrage, par l'intermédiaire desquels les ouvertures de passage (18,19) des éléments de couplage (8, 9) sont centrées les unes par rapport aux autres lorsque les éléments de couplage sont assemblés ou peuvent être centrées les unes par rapport aux autres lors de l'assemblage de ces derniers.

10. Dispositif d'individualisation laser (1) selon l'une quelconque des revendications 7 à 9, **caractérisé en ce que** le boîtier de module de production de rayonnement (4) et le boîtier de module fonctionnel (2) sont reliés l'un à l'autre au moyen d'un conducteur de lumière (7).

11. Dispositif d'individualisation laser (1) selon la revendication 10, **caractérisé en ce que** le conducteur de lumière (7) est bloqué ou peut être bloqué dans le premier élément de couplage (8) de sorte que le conducteur de lumière (7) ou un trajet de lumière du rayonnement laser (20) sortant du conducteur de lumière sont guidés ou peuvent être guidés essentiellement de manière centrée à travers l'ouverture de passage (118).

12. Dispositif d'individualisation laser (1) selon l'une quelconque des revendications 10 ou 11, **caractérisé en ce que** le premier élément de couplage (8) est réalisé sous la forme d'une bride d'amenée (112), dans laquelle le conducteur de lumière (7) peut être bloqué ou est bloqué, et **en ce que** le deuxième élément de couplage (9) est une bride de réception (111), qui est disposée dans le boîtier de module fonctionnel (2) ou est disposée dans le boîtier de module de production de rayonnement (4), et **en ce que** la bride d'amenée (112) et la bride de réception (111) comprennent des moyens de fixation et/ou de guidage réalisés de manière asymétrique de sorte que la bride de réception (111) et la bride d'amenée (112) ne peuvent être assemblées l'une à l'autre de manière amovible que dans une seule orientation.

13. Dispositif d'individualisation laser (1) selon l'une quelconque des revendications 7 à 12, **caractérisé en ce qu'**est disposé, dans le boîtier de module fonctionnel (2), un plateau tournant (22), qui comprend un système de réception de document, qui est disposé de manière mobile de telle manière qu'il peut être déplacé dans une position de réception, dans laquelle un document (23) amené se déplace sous l'effet d'entraînement exercé par la force de gravité dans une position de document prédéfinie dans le système de réception de document.

14. Dispositif d'individualisation laser (1) selon l'une quelconque des revendications 7 à 13, **caractérisé en ce qu'**est réalisé, dans ou au niveau du boîtier de module fonctionnel (2), un système d'aspiration (91), qui comprend un canal d'aspiration (92), dans lequel est disposé un clapet (160), qui est logé de manière à pouvoir pivoter autour d'un axe (161) orienté de manière transversale par rapport à la direction d'écoulement (162) du canal d'aspiration (92) et qui fait saillie dans le chemin d'écoulement du canal d'aspiration (92) dans un état de repos, dans lequel le canal d'aspiration (92) n'est traversé par aucun écoulement de fluide, et dans lequel est disposé un capteur (164) dans la zone de pivotement du clapet (161) ou au niveau de cette dernière, ledit capteur permettant de détecter une translation du clapet (161) lors d'un écoulement de fluide au cours d'une aspiration de fluide.

15. Dispositif d'individualisation laser (1) selon l'une quelconque des revendications 7 à 14, **caractérisé en ce que** le boîtier de module fonctionnel comprend un système de sélection de document, sachant que le système de sélection de document comprend au moins deux systèmes de collecte (101, 102) servant à recevoir des documents,
une ouverture de réception servant à amener des documents séparés et
des moyens de guidage de document servant à acheminer au choix le document amené en direction de l'un des deux systèmes de collecte (101,102) ou plus, sachant que les moyens de guidage de document forment deux trajets de guidage de document (201, 202) entre l'ouverture de réception et les deux systèmes de collecte ou plus, et sachant que les moyens de guidage de document comprennent au moins une section d'aiguillage mobile et une section de guidage de document, sachant que la section d'aiguillage (203) forme, dans une position fermée, avec la section de guidage de document, une voie de glissement (204) inclinée par rapport à la verticale et à l'horizontale, d'un des deux trajets de guidage de document ou plus de sorte qu'un document amené glisse sous l'effet de l'entraînement exercé par la force de gravité le long de l'intégralité de la voie de glissement (204) et est acheminé pour finir à l'un des deux systèmes de collecte ou plus, et sachant que dans une position ouverte, une fente se forme dans ladite voie de glissement (204), laquelle fente s'étend de manière transversale par rapport à une direction de glissement de sorte qu'un document (23) entrant dans la voie de glissement (204) traverse la fente réalisée lors d'un glissement exécuté sous l'effet de l'entraînement exercé par la force de gravité et quitte la voie de glissement (204) pour être acheminé, pour ce faire, le long d'un des deux trajets de guidage de document (201, 202) ou plus, sous l'effet de l'entraînement exercé par la force de gravité, en direction d'un autre des deux systèmes de collecte ou plus afin d'utiliser les deux systèmes de collecte ou plus en tant que compartiment pour documents validés servant à recevoir des documents personnalisés avec succès et en tant que compartiment pour documents non validés réservés aux documents à mettre au rebut.
